# EUROPEAN PATENT APPLICATION

(11) **EP 4 734 482 A1**
(43) Date of publication of application: **29.04.2026**
(21) Application number: 24208664.3
(22) Date of filing: 24.10.2024
(51) Int. Cl.: H04L 67/00, H04L 12/46, H04L 45/00, H04L 61/5007

(54) **METHODS, ARCHITECTURES, APPARATUSES AND SYSTEMS FOR COMPUTING AWARE TRAFFIC STEERING SENSOR MOBILITY**

(71) Applicant: InterDigital Patent Holdings, Inc., Wilmington, DE 19809 (US)
(72) Inventor: BERNARDOS, Carlos Jesus, 28922 MADRID (ES); MOURAD, Alain, ASCOT, SL5 9PA (GB)
(74) Representative: Interdigital

(57) **Abstract**

A method, implemented in a first network element is described. The method may include determining that a service may be to be migrated from a first site to a second site, the service involving processing data from a device having moved from a first point of attachment to a second point of attachment. The method may include sending a first request to a second network element of the second site to establish a traffic session with the first network element, the first request indicating an IP prefix in use by the device to reach the service. The method may include establishing an IP tunnel between the first network element and the second network element, such that traffic received by the first network element and directed to the IP prefix may be sent through the tunnel.

## Description

### TECHNICAL FIELD

The present disclosure is generally directed to the fields of communications, software and encoding, including methods, architectures, apparatuses, and systems directed to computing aware traffic steering (CATS) sensor mobility.

### BACKGROUND

The Internet engineering task force (IETF) CATS working group addresses the problem of how the network infrastructure can steer traffic between clients of a service and sites offering the service, considering network and compute metrics. Embodiments described herein have been designed with the foregoing in mind.

### SUMMARY

Methods, architectures, apparatuses, and systems directed to CATS mobility are described herein. In an embodiment, a first method implemented in a first network element is described. The first method may include determining that a service may be to be migrated from a first site to a second site. In various embodiments, the service may involve processing data from a device having moved from a first point of attachment to a second point of attachment. The first method may include sending a first request to a second network element of the second site to establish a traffic session with the first network element. In various embodiments, the first request may indicate an internet protocol (IP) prefix in use by the device to reach the service. The first method may include receiving a first response from the second network element of the second site in response to the first request. In various embodiments, the first response may indicate the IP prefix in use by the device to reach the service. The first method may include establishing an IP tunnel between the first network element and the second network element, such that traffic received by the first network element and directed to the IP prefix may be sent through the tunnel.

In an embodiment, a first network element is described. The first network element may include circuitry including any of transmitter, a receiver, a processor, and a memory. The first network element may be configured to determine that a service may be to be migrated from a first site to a second site. In various embodiments, the service may involve processing data from a device having moved from a first point of attachment to a second point of attachment. The first network element may be configured to send a first request to a second network element of the second site to establish a traffic session with the first network element. In various embodiments, the first request may indicate an IP prefix in use by the device to reach the service. The first network element may be configured to receive a first response from the second network element of the second site in response to the first request. In various embodiments, the first response may indicate the IP prefix in use by the device to reach the service. The first network element may be configured to establish an IP tunnel between the first network element and the second network element, such that traffic received by the first network element and directed to the IP prefix may be sent through the tunnel.

In an embodiment, a second method implemented in a first network element is described. The second method may include determining that a service involving processing data from a device may be to remain hosted on a site despite the device having moved from a first point of attachment to a second point of attachment. The second method may include sending a request to a second network element of the site to establish a traffic session with the first network element. In various embodiments, the request may indicate an IP prefix in use by the device to reach the service. The second method may include receiving a response from the second network element of the site in response to the request. In various embodiments, the response may indicate the IP prefix in use by the device to reach the service. The second method may include updating an IP tunnel previously established between a third network element associated with the first point of attachment and the second network element to be established between the first network element associated with the second point of attachment and the second network element, such that traffic received by the first network element and directed to the IP prefix may be sent through the tunnel.

In an embodiment, a first network element is described. The first network element may include circuitry including any of transmitter, a receiver, a processor, and a memory. The first network element may be configured to determine that a service involving processing data from a device may be to remain hosted on a site despite the device having moved from a first point of attachment to a second point of attachment. The first network element may be configured to send a request to a second network element of the site to establish a traffic session with the first network element. In various embodiments, the request may indicate an IP prefix in use by the device to reach the service. The first network element may be configured to receive a response from the second network element of the site in response to the request. In various embodiments, the response may indicate the IP prefix in use by the device to reach the service. The first network element may be configured to update an IP tunnel previously established between a third network element associated with the first point of attachment and the second network element to be established between the first network element associated with the second point of attachment and the second network element, such that traffic received by the first network element and directed to the IP prefix may be sent through the tunnel.

### BRIEF DESCRIPTION OF THE DRAWINGS

A more detailed understanding may be had from the detailed description below, given by way of example in conjunction with drawings appended hereto. Figures in such drawings, like the detailed description, are examples. As such, the Figures (FIGs.) and the detailed description are not to be considered limiting, and other equally effective examples are possible and likely. Furthermore, like reference numerals ("ref.") in the FIGs. indicate like elements, and wherein:
FIG. 1A is a system diagram illustrating an example communications system;
FIG. 1B is a system diagram illustrating an example wireless transmit/receive unit (WTRU) that may be used within the communications system illustrated in FIG. 1A;
FIG. 1C is a system diagram illustrating an example radio access network (RAN) and an example core network (CN) that may be used within the communications system illustrated in FIG. 1A;
FIG. 1D is a system diagram illustrating a further example RAN and a further example CN that may be used within the communications system illustrated in FIG. 1A;
FIG. 2 is a diagram illustrating an exemplary scenario;
FIG. 3 is a diagram illustrating an example architecture;
FIG. 4 is a diagram illustrating an example signaling of sensing terminal mobility with internet protocol (IP) anchor mobility for CATS, aided by a CATS-aware sensing terminal;
FIG. 5 is a diagram illustrating an example signaling of sensing terminal mobility with IP anchor mobility for CATS, aided by the ingress CATS router (ICR);
FIG. 6 is a diagram illustrating an example signaling of sensing terminal mobility with IP anchor mobility for CATS, aided by a CATS controller;
FIG. 7 is a diagram illustrating a first example method for CATS device mobility; and
FIG. 8 is a diagram illustrating a second method for CATS device mobility.

### DETAILED DESCRIPTION

In the following detailed description, numerous specific details are set forth to provide a thorough understanding of embodiments and/or examples disclosed herein. However, it will be understood that such embodiments and examples may be practiced without some or all of the specific details set forth herein. In other instances, well-known methods, procedures, components and circuits have not been described in detail, so as not to obscure the following description. Further, embodiments and examples not specifically described herein may be practiced in lieu of, or in combination with, the embodiments and other examples described, disclosed or otherwise provided explicitly, implicitly and/or inherently (collectively "provided") herein. Although various embodiments are described and/or claimed herein in which an apparatus, system, device, etc. and/or any element thereof carries out an operation, process, algorithm, function, etc. and/or any portion thereof, it is to be understood that any embodiments described and/or claimed herein assume that any apparatus, system, device, etc. and/or any element thereof is configured to carry out any operation, process, algorithm, function, etc. and/or any portion thereof.

### Example Communications System

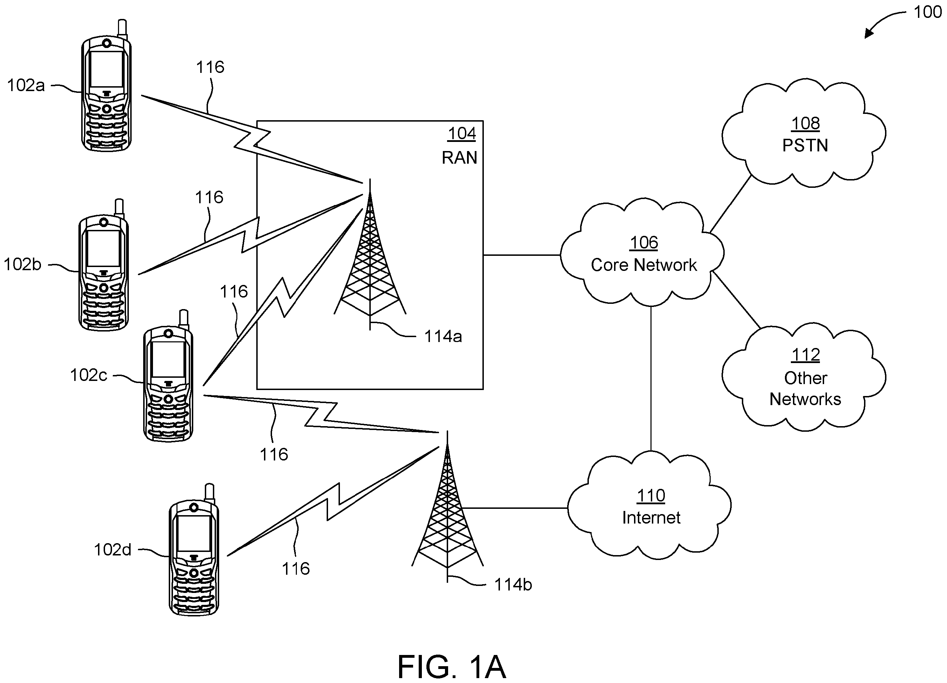

The methods, apparatuses and systems provided herein are well-suited for communications involving both wired and wireless networks. An overview of various types of wireless devices and infrastructure is provided with respect to FIGs. 1A-1D, where various elements of the network may utilize, perform, be arranged in accordance with and/or be adapted and/or configured for the methods, apparatuses and systems provided herein.

FIG. 1A is a system diagram illustrating an example communications system 100 in which one or more disclosed embodiments may be implemented. The communications system 100 may be a multiple access system that provides content, such as voice, data, video, messaging, broadcast, etc., to multiple wireless users. The communications system 100 may enable multiple wireless users to access such content through the sharing of system resources, including wireless bandwidth. For example, the communications systems 100 may employ one or more channel access methods, such as code division multiple access (CDMA), time division multiple access (TDMA), frequency division multiple access (FDMA), orthogonal FDMA (OFDMA), single-carrier FDMA (SC-FDMA), zero-tail (ZT) unique-word (UW) discrete Fourier transform (DFT) spread OFDM (ZT UW DTS-s OFDM), unique word OFDM (UW-OFDM), resource block-filtered OFDM, filter bank multicarrier (FBMC), and the like.

As shown in FIG. 1A, the communications system 100 may include wireless transmit/receive units (WTRUs) 102a, 102b, 102c, 102d, a radio access network (RAN) 104/113, a core network (CN) 106/115, a public switched telephone network (PSTN) 108, the Internet 110, and other networks 112, though it will be appreciated that the disclosed embodiments contemplate any number of WTRUs, base stations, networks, and/or network elements. Each of the WTRUs 102a, 102b, 102c, 102d may be any type of device configured to operate and/or communicate in a wireless environment. By way of example, the WTRUs 102a, 102b, 102c, 102d, any of which may be referred to as a "station" and/or a "STA", may be configured to transmit and/or receive wireless signals and may include (or be) a user equipment (UE), a mobile station, a fixed or mobile subscriber unit, a subscription-based unit, a pager, a cellular telephone, a personal digital assistant (PDA), a smartphone, a laptop, a netbook, a personal computer, a wireless sensor, a hotspot or Mi-Fi device, an Internet of Things (IoT) device, a watch or other wearable, a head-mounted display (HMD), a vehicle, a drone, a medical device and applications (e.g., remote surgery), an industrial device and applications (e.g., a robot and/or other wireless devices operating in an industrial and/or an automated processing chain contexts), a consumer electronics device, a device operating on commercial and/or industrial wireless networks, and the like. Any of the WTRUs 102a, 102b, 102c and 102d may be interchangeably referred to as a UE.

The communications systems 100 may also include a base station 114a and/or a base station 114b. Each of the base stations 114a, 114b may be any type of device configured to wirelessly interface with at least one of the WTRUs 102a, 102b, 102c, 102d, e.g., to facilitate access to one or more communication networks, such as the CN 106/115, the Internet 110, and/or the networks 112. By way of example, the base stations 114a, 114b may be any of a base transceiver station (BTS), a Node-B (NB), an eNode-B (eNB), a Home Node-B (HNB), a Home eNode-B (HeNB), a gNode-B (gNB), a NR Node-B (NR NB), a site controller, an access point (AP), a wireless router, and the like. While the base stations 114a, 114b are each depicted as a single element, it will be appreciated that the base stations 114a, 114b may include any number of interconnected base stations and/or network elements.

The base station 114a may be part of the RAN 104/113, which may also include other base stations and/or network elements (not shown), such as a base station controller (BSC), a radio network controller (RNC), relay nodes, etc. The base station 114a and/or the base station 114b may be configured to transmit and/or receive wireless signals on one or more carrier frequencies, which may be referred to as a cell (not shown). These frequencies may be in licensed spectrum, unlicensed spectrum, or a combination of licensed and unlicensed spectrum. A cell may provide coverage for a wireless service to a specific geographical area that may be relatively fixed or that may change over time. The cell may further be divided into cell sectors. For example, the cell associated with the base station 114a may be divided into three sectors. Thus, in an embodiment, the base station 114a may include three transceivers, i.e., one for each sector of the cell. In an embodiment, the base station 114a may employ multiple-input multiple output (MIMO) technology and may utilize multiple transceivers for each or any sector of the cell. For example, beamforming may be used to transmit and/or receive signals in desired spatial directions.

The base stations 114a, 114b may communicate with one or more of the WTRUs 102a, 102b, 102c, 102d over an air interface 116, which may be any suitable wireless communication link (e.g., radio frequency (RF), microwave, centimeter wave, micrometer wave, infrared (IR), ultraviolet (UV), visible light, etc.). The air interface 116 may be established using any suitable radio access technology (RAT).

More specifically, as noted above, the communications system 100 may be a multiple access system and may employ one or more channel access schemes, such as CDMA, TDMA, FDMA, OFDMA, SC-FDMA, and the like. For example, the base station 114a in the RAN 104/113 and the WTRUs 102a, 102b, 102c may implement a radio technology such as Universal Mobile Telecommunications System (UMTS) Terrestrial Radio Access (UTRA), which may establish the air interface 116 using wideband CDMA (WCDMA). WCDMA may include communication protocols such as High-Speed Packet Access (HSPA) and/or Evolved HSPA (HSPA+). HSPA may include High-Speed Downlink Packet Access (HSDPA) and/or High-Speed Uplink Packet Access (HSUPA).

In an embodiment, the base station 114a and the WTRUs 102a, 102b, 102c may implement a radio technology such as Evolved UMTS Terrestrial Radio Access (E-UTRA), which may establish the air interface 116 using Long Term Evolution (LTE) and/or LTE-Advanced (LTE-A) and/or LTE-Advanced Pro (LTE-A Pro).

In an embodiment, the base station 114a and the WTRUs 102a, 102b, 102c may implement a radio technology such as NR Radio Access, which may establish the air interface 116 using New Radio (NR).

In an embodiment, the base station 114a and the WTRUs 102a, 102b, 102c may implement multiple radio access technologies. For example, the base station 114a and the WTRUs 102a, 102b, 102c may implement LTE radio access and NR radio access together, for instance using dual connectivity (DC) principles. Thus, the air interface utilized by WTRUs 102a, 102b, 102c may be characterized by multiple types of radio access technologies and/or transmissions sent to/from multiple types of base stations (e.g., an eNB and a gNB).

In an embodiment, the base station 114a and the WTRUs 102a, 102b, 102c may implement radio technologies such as IEEE 802.11 (i.e., Wireless Fidelity (Wi-Fi), IEEE 802.16 (i.e., Worldwide Interoperability for Microwave Access (WiMAX)), CDMA2000, CDMA2000 1X, CDMA2000 EV-DO, Interim Standard 2000 (IS-2000), Interim Standard 95 (IS-95), Interim Standard 856 (IS-856), Global System for Mobile communications (GSM), Enhanced Data rates for GSM Evolution (EDGE), GSM EDGE (GERAN), and the like.

The base station 114b in FIG. 1A may be a wireless router, Home Node-B, Home eNode-B, or access point, for example, and may utilize any suitable RAT for facilitating wireless connectivity in a localized area, such as a place of business, a home, a vehicle, a campus, an industrial facility, an air corridor (e.g., for use by drones), a roadway, and the like. In an embodiment, the base station 114b and the WTRUs 102c, 102d may implement a radio technology such as IEEE 802.11 to establish a wireless local area network (WLAN). In an embodiment, the base station 114b and the WTRUs 102c, 102d may implement a radio technology such as IEEE 802.15 to establish a wireless personal area network (WPAN). In an embodiment, the base station 114b and the WTRUs 102c, 102d may utilize a cellular-based RAT (e.g., WCDMA, CDMA2000, GSM, LTE, LTE-A, LTE-A Pro, NR, etc.) to establish any of a small cell, picocell or femtocell. As shown in FIG. 1A, the base station 114b may have a direct connection to the Internet 110. Thus, the base station 114b may not be required to access the Internet 110 via the CN 106/115.

The RAN 104/113 may be in communication with the CN 106/115, which may be any type of network configured to provide voice, data, applications, and/or voice over internet protocol (VoIP) services to one or more of the WTRUs 102a, 102b, 102c, 102d. The data may have varying quality of service (QoS) requirements, such as differing throughput requirements, latency requirements, error tolerance requirements, reliability requirements, data throughput requirements, mobility requirements, and the like. The CN 106/115 may provide call control, billing services, mobile location-based services, pre-paid calling, Internet connectivity, video distribution, etc., and/or perform high-level security functions, such as user authentication. Although not shown in FIG. 1A, it will be appreciated that the RAN 104/113 and/or the CN 106/115 may be in direct or indirect communication with other RANs that employ the same RAT as the RAN 104/113 or a different RAT. For example, in addition to being connected to the RAN 104/113, which may be utilizing an NR radio technology, the CN 106/115 may also be in communication with another RAN (not shown) employing any of a GSM, UMTS, CDMA 2000, WiMAX, E-UTRA, or Wi-Fi radio technology.

The CN 106/115 may also serve as a gateway for the WTRUs 102a, 102b, 102c, 102d to access the PSTN 108, the Internet 110, and/or other networks 112. The PSTN 108 may include circuit-switched telephone networks that provide plain old telephone service (POTS). The Internet 110 may include a global system of interconnected computer networks and devices that use common communication protocols, such as the transmission control protocol (TCP), user datagram protocol (UDP) and/or the internet protocol (IP) in the TCP/IP internet protocol suite. The networks 112 may include wired and/or wireless communications networks owned and/or operated by other service providers. For example, the networks 112 may include another CN connected to one or more RANs, which may employ the same RAT as the RAN 104/114 or a different RAT.

Some or all of the WTRUs 102a, 102b, 102c, 102d in the communications system 100 may include multi-mode capabilities (e.g., the WTRUs 102a, 102b, 102c, 102d may include multiple transceivers for communicating with different wireless networks over different wireless links). For example, the WTRU 102c shown in FIG. 1A may be configured to communicate with the base station 114a, which may employ a cellular-based radio technology, and with the base station 114b, which may employ an IEEE 802 radio technology.

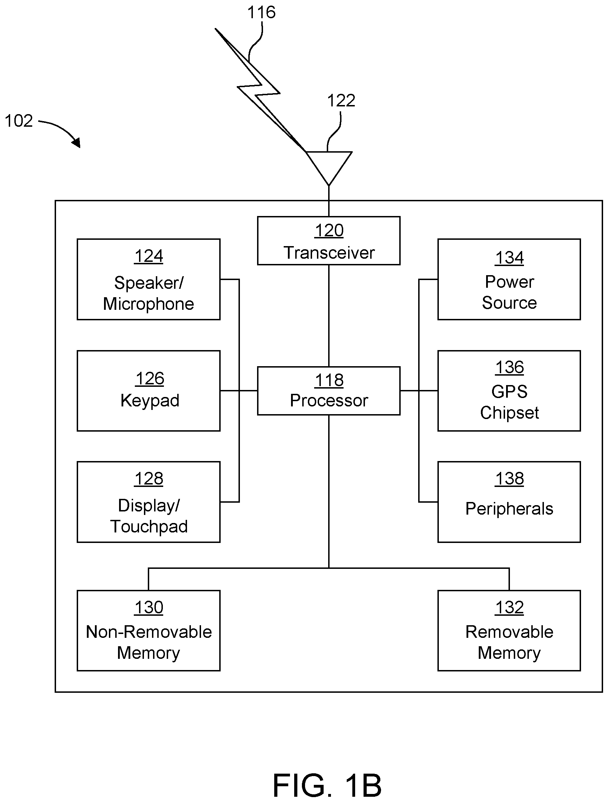

FIG. 1B is a system diagram illustrating an example WTRU 102. As shown in FIG. 1B, the WTRU 102 may include a processor 118, a transceiver 120, a transmit/receive element 122, a speaker/microphone 124, a keypad 126, a display/touchpad 128, non-removable memory 130, removable memory 132, a power source 134, a global positioning system (GPS) chipset 136, and/or other elements/peripherals 138, among others. It will be appreciated that the WTRU 102 may include any sub-combination of the foregoing elements while remaining consistent with an embodiment.

The processor 118 may be a general-purpose processor, a special purpose processor, a conventional processor, a digital signal processor (DSP), a plurality of microprocessors, one or more microprocessors in association with a DSP core, a controller, a microcontroller, Application Specific Integrated Circuits (ASICs), Field Programmable Gate Arrays (FPGAs) circuits, any other type of integrated circuit (IC), a state machine, and the like. The processor 118 may perform signal coding, data processing, power control, input/output processing, and/or any other functionality that enables the WTRU 102 to operate in a wireless environment. The processor 118 may be coupled to the transceiver 120, which may be coupled to the transmit/receive element 122. While FIG. 1B depicts the processor 118 and the transceiver 120 as separate components, it will be appreciated that the processor 118 and the transceiver 120 may be integrated together, e.g., in an electronic package or chip.

The transmit/receive element 122 may be configured to transmit signals to, or receive signals from, a base station (e.g., the base station 114a) over the air interface 116. For example, in an embodiment, the transmit/receive element 122 may be an antenna configured to transmit and/or receive RF signals. In an embodiment, the transmit/receive element 122 may be an emitter/detector configured to transmit and/or receive IR, UV, or visible light signals, for example. In an embodiment, the transmit/receive element 122 may be configured to transmit and/or receive both RF and light signals. It will be appreciated that the transmit/receive element 122 may be configured to transmit and/or receive any combination of wireless signals.

Although the transmit/receive element 122 is depicted in FIG. 1B as a single element, the WTRU 102 may include any number of transmit/receive elements 122. For example, the WTRU 102 may employ MIMO technology. Thus, in an embodiment, the WTRU 102 may include two or more transmit/receive elements 122 (e.g., multiple antennas) for transmitting and receiving wireless signals over the air interface 116.

The transceiver 120 may be configured to modulate the signals that are to be transmitted by the transmit/receive element 122 and to demodulate the signals that are received by the transmit/receive element 122. As noted above, the WTRU 102 may have multi-mode capabilities. Thus, the transceiver 120 may include multiple transceivers for enabling the WTRU 102 to communicate via multiple RATs, such as NR and IEEE 802.11, for example.

The processor 118 of the WTRU 102 may be coupled to, and may receive user input data from, the speaker/microphone 124, the keypad 126, and/or the display/touchpad 128 (e.g., a liquid crystal display (LCD) display unit or organic light-emitting diode (OLED) display unit). The processor 118 may also output user data to the speaker/microphone 124, the keypad 126, and/or the display/touchpad 128. In addition, the processor 118 may access information from, and store data in, any type of suitable memory, such as the non-removable memory 130 and/or the removable memory 132. The non-removable memory 130 may include random-access memory (RAM), read-only memory (ROM), a hard disk, or any other type of memory storage device. The removable memory 132 may include a subscriber identity module (SIM) card, a memory stick, a secure digital (SD) memory card, and the like. In other embodiments, the processor 118 may access information from, and store data in, memory that is not physically located on the WTRU 102, such as on a server or a home computer (not shown).

The processor 118 may receive power from the power source 134 and may be configured to distribute and/or control the power to the other components in the WTRU 102. The power source 134 may be any suitable device for powering the WTRU 102. For example, the power source 134 may include one or more dry cell batteries (e.g., nickel-cadmium (NiCd), nickel-zinc (NiZn), nickel metal hydride (NiMH), lithium-ion (Li-ion), etc.), solar cells, fuel cells, and the like.

The processor 118 may also be coupled to the GPS chipset 136, which may be configured to provide location information (e.g., longitude and latitude) regarding the current location of the WTRU 102. In addition to, or in lieu of, the information from the GPS chipset 136, the WTRU 102 may receive location information over the air interface 116 from a base station (e.g., base stations 114a, 114b) and/or determine its location based on the timing of the signals being received from two or more nearby base stations. It will be appreciated that the WTRU 102 may acquire location information by way of any suitable location-determination method while remaining consistent with an embodiment.

The processor 118 may further be coupled to other elements/peripherals 138, which may include one or more software and/or hardware modules/units that provide additional features, functionality and/or wired or wireless connectivity. For example, the elements/peripherals 138 may include an accelerometer, an e-compass, a satellite transceiver, a digital camera (e.g., for photographs and/or video), a universal serial bus (USB) port, a vibration device, a television transceiver, a hands free headset, a Bluetooth^{®} module, a frequency modulated (FM) radio unit, a digital music player, a media player, a video game player module, an Internet browser, a virtual reality and/or augmented reality (VR/AR) device, an activity tracker, and the like. The elements/peripherals 138 may include one or more sensors, the sensors may be one or more of a gyroscope, an accelerometer, a hall effect sensor, a magnetometer, an orientation sensor, a proximity sensor, a temperature sensor, a time sensor; a geolocation sensor; an altimeter, a light sensor, a touch sensor, a magnetometer, a barometer, a gesture sensor, a biometric sensor, and/or a humidity sensor.

The WTRU 102 may include a full duplex radio for which transmission and reception of some or all of the signals (e.g., associated with particular subframes for both the uplink (e.g., for transmission) and downlink (e.g., for reception) may be concurrent and/or simultaneous. The full duplex radio may include an interference management unit to reduce and or substantially eliminate self-interference via either hardware (e.g., a choke) or signal processing via a processor (e.g., a separate processor (not shown) or via processor 118). In an embodiment, the WTRU 102 may include a half-duplex radio for which transmission and reception of some or all of the signals (e.g., associated with particular subframes for either the uplink (e.g., for transmission) or the downlink (e.g., for reception)).

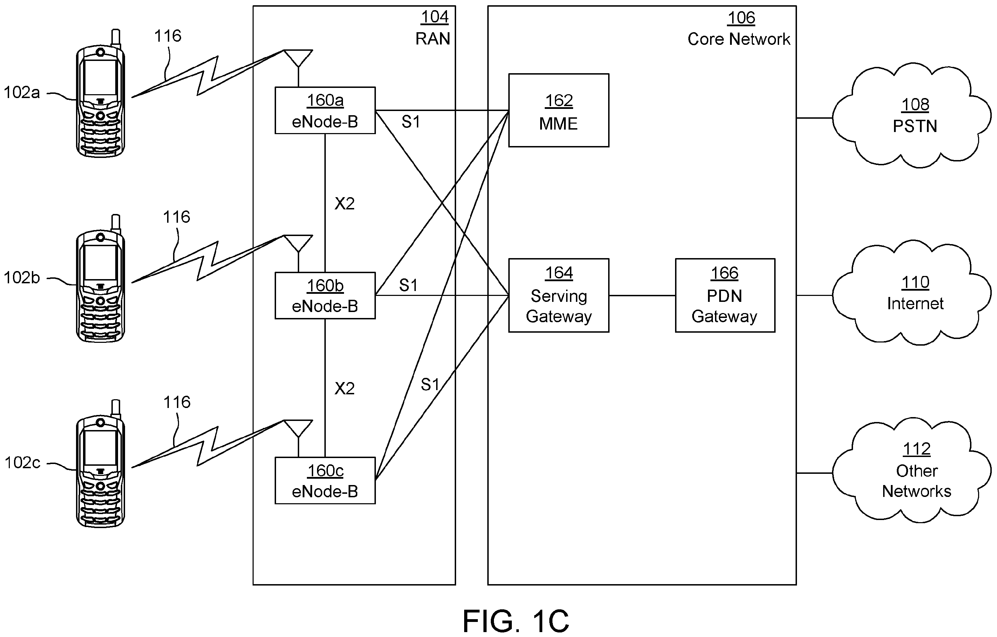

FIG. 1C is a system diagram illustrating the RAN 104 and the CN 106 according to an embodiment. As noted above, the RAN 104 may employ an E-UTRA radio technology to communicate with the WTRUs 102a, 102b, and 102c over the air interface 116. The RAN 104 may also be in communication with the CN 106.

The RAN 104 may include eNode-Bs 160a, 160b, 160c, though it will be appreciated that the RAN 104 may include any number of eNode-Bs while remaining consistent with an embodiment. The eNode-Bs 160a, 160b, 160c may each include one or more transceivers for communicating with the WTRUs 102a, 102b, 102c over the air interface 116. In an embodiment, the eNode-Bs 160a, 160b, 160c may implement MIMO technology. Thus, the eNode-B 160a, for example, may use multiple antennas to transmit wireless signals to, and receive wireless signals from, the WTRU 102a.

Each of the eNode-Bs 160a, 160b, and 160c may be associated with a particular cell (not shown) and may be configured to handle radio resource management decisions, handover decisions, scheduling of users in the uplink (UL) and/or downlink (DL), and the like. As shown in FIG. 1C, the eNode-Bs 160a, 160b, 160c may communicate with one another over an X2 interface.

The CN 106 shown in FIG. 1C may include a mobility management entity (MME) 162, a serving gateway (SGW) 164, and a packet data network (PDN) gateway (PGW) 166. While each of the foregoing elements are depicted as part of the CN 106, it will be appreciated that any one of these elements may be owned and/or operated by an entity other than the CN operator.

The MME 162 may be connected to each of the eNode-Bs 160a, 160b, and 160c in the RAN 104 via an S1 interface and may serve as a control node. For example, the MME 162 may be responsible for authenticating users of the WTRUs 102a, 102b, 102c, bearer activation/deactivation, selecting a particular serving gateway during an initial attach of the WTRUs 102a, 102b, 102c, and the like. The MME 162 may provide a control plane function for switching between the RAN 104 and other RANs (not shown) that employ other radio technologies, such as GSM and/or WCDMA.

The SGW 164 may be connected to each of the eNode-Bs 160a, 160b, 160c in the RAN 104 via the S1 interface. The SGW 164 may generally route and forward user data packets to/from the WTRUs 102a, 102b, 102c. The SGW 164 may perform other functions, such as anchoring user planes during inter-eNode-B handovers, triggering paging when DL data is available for the WTRUs 102a, 102b, 102c, managing and storing contexts of the WTRUs 102a, 102b, 102c, and the like.

The SGW 164 may be connected to the PGW 166, which may provide the WTRUs 102a, 102b, 102c with access to packet-switched networks, such as the Internet 110, to facilitate communications between the WTRUs 102a, 102b, 102c and IP-enabled devices.

The CN 106 may facilitate communications with other networks. For example, the CN 106 may provide the WTRUs 102a, 102b, 102c with access to circuit-switched networks, such as the PSTN 108, to facilitate communications between the WTRUs 102a, 102b, 102c and traditional land-line communications devices. For example, the CN 106 may include, or may communicate with, an IP gateway (e.g., an IP multimedia subsystem (IMS) server) that serves as an interface between the CN 106 and the PSTN 108. In addition, the CN 106 may provide the WTRUs 102a, 102b, 102c with access to the other networks 112, which may include other wired and/or wireless networks that are owned and/or operated by other service providers.

Although the WTRU is described in FIGs. 1A-1D as a wireless terminal, it is contemplated that in certain representative embodiments that such a terminal may use (e.g., temporarily or permanently) wired communication interfaces with the communication network.

In representative embodiments, the other network 112 may be a WLAN.

A WLAN in infrastructure basic service set (BSS) mode may have an access point (AP) for the BSS and one or more stations (STAs) associated with the AP. The AP may have an access or an interface to a distribution system (DS) or another type of wired/wireless network that carries traffic into and/or out of the BSS. Traffic to STAs that originates from outside the BSS may arrive through the AP and may be delivered to the STAs. Traffic originating from STAs to destinations outside the BSS may be sent to the AP to be delivered to respective destinations. Traffic between STAs within the BSS may be sent through the AP, for example, where the source STA may send traffic to the AP and the AP may deliver the traffic to the destination STA. The traffic between STAs within a BSS may be considered and/or referred to as peer-to-peer traffic. The peer-to-peer traffic may be sent between (e.g., directly between) the source and destination STAs with a direct link setup (DLS). In certain representative embodiments, the DLS may use an 802.11e DLS or an 802.1 1z tunneled DLS (TDLS). A WLAN using an Independent BSS (IBSS) mode may not have an AP, and the STAs (e.g., all of the STAs) within or using the IBSS may communicate directly with each other. The IBSS mode of communication may sometimes be referred to herein as an "ad-hoc" mode of communication.

When using the 802.11ac infrastructure mode of operation or a similar mode of operations, the AP may transmit a beacon on a fixed channel, such as a primary channel. The primary channel may be a fixed width (e.g., 20 MHz wide bandwidth) or a dynamically set width via signaling. The primary channel may be the operating channel of the BSS and may be used by the STAs to establish a connection with the AP. In certain representative embodiments, Carrier sense multiple access with collision avoidance (CSMA/CA) may be implemented, for example in in 802.11 systems. For CSMA/CA, the STAs (e.g., every STA), including the AP, may sense the primary channel. If the primary channel is sensed/detected and/or determined to be busy by a particular STA, the particular STA may back off. One STA (e.g., only one station) may transmit at any given time in a given BSS.

High throughput (HT) STAs may use a 40 MHz wide channel for communication, for example, via a combination of the primary 20 MHz channel with an adjacent or nonadjacent 20 MHz channel to form a 40 MHz wide channel.

Very high throughput (VHT) STAs may support 20 MHz, 40 MHz, 80 MHz, and/or 160 MHz wide channels. The 40 MHz, and/or 80 MHz, channels may be formed by combining contiguous 20 MHz channels. A 160 MHz channel may be formed by combining 8 contiguous 20 MHz channels, or by combining two non-contiguous 80 MHz channels, which may be referred to as an 80+80 configuration. For the 80+80 configuration, the data, after channel encoding, may be passed through a segment parser that may divide the data into two streams. Inverse fast fourier transform (IFFT) processing, and time domain processing, may be done on each stream separately. The streams may be mapped on to the two 80 MHz channels, and the data may be transmitted by a transmitting STA. At the receiver of the receiving STA, the above-described operation for the 80+80 configuration may be reversed, and the combined data may be sent to a medium access control (MAC) layer, entity, etc.

Sub 1 GHz modes of operation are supported by 802.1 1af and 802.11ah. The channel operating bandwidths, and carriers, are reduced in 802.11af and 802.11ah relative to those used in 802.11n, and 802.11ac. 802.11af supports 5 MHz, 10 MHz and 20 MHz bandwidths in the TV white space (TVWS) spectrum, and 802.11ah supports 1 MHz, 2 MHz, 4 MHz, 8 MHz, and 16 MHz bandwidths using non-TVWS spectrum. According to a representative embodiment, 802.11ah may support meter type control/machine-type communications (MTC), such as MTC devices in a macro coverage area. MTC devices may have certain capabilities, for example, limited capabilities including support for (e.g., only support for) certain and/or limited bandwidths. The MTC devices may include a battery with a battery life above a threshold (e.g., to maintain a very long battery life).

WLAN systems, which may support multiple channels, and channel bandwidths, such as 802.11n, 802.11ac, 802.11af, and 802.11ah, include a channel which may be designated as the primary channel. The primary channel may have a bandwidth equal to the largest common operating bandwidth supported by all STAs in the BSS. The bandwidth of the primary channel may be set and/or limited by a STA, from among all STAs in operating in a BSS, which supports the smallest bandwidth operating mode. In the example of 802.1 1ah, the primary channel may be 1 MHz wide for STAs (e.g., MTC type devices) that support (e.g., only support) a 1 MHz mode, even if the AP, and other STAs in the BSS support 2 MHz, 4 MHz, 8 MHz, 16 MHz, and/or other channel bandwidth operating modes. Carrier sensing and/or network allocation vector (NAV) settings may depend on the status of the primary channel. If the primary channel is busy, for example, due to a STA (which supports only a 1 MHz operating mode), transmitting to the AP, the entire available frequency bands may be considered busy even though a majority of the frequency bands remains idle and may be available.

In the United States, the available frequency bands, which may be used by 802.11ah, are from 902 MHz to 928 MHz. In Korea, the available frequency bands are from 917.5 MHz to 923.5 MHz. In Japan, the available frequency bands are from 916.5 MHz to 927.5 MHz. The total bandwidth available for 802.11ah is 6 MHz to 26 MHz depending on the country code.

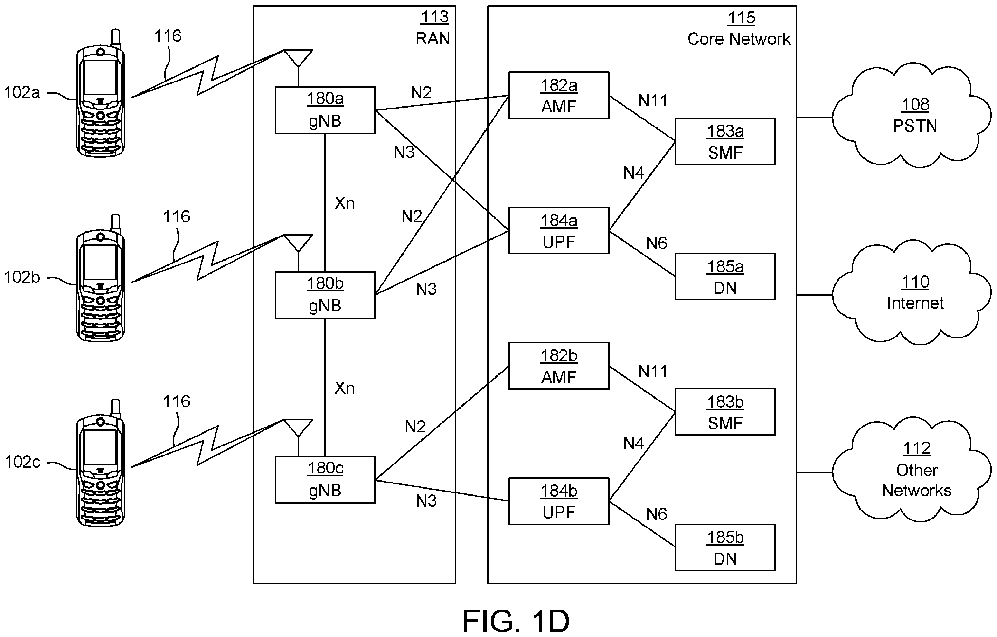

FIG. 1D is a system diagram illustrating the RAN 113 and the CN 115 according to an embodiment. As noted above, the RAN 113 may employ an NR radio technology to communicate with the WTRUs 102a, 102b, 102c over the air interface 116. The RAN 113 may also be in communication with the CN 115.

The RAN 113 may include gNBs 180a, 180b, 180c, though it will be appreciated that the RAN 113 may include any number of gNBs while remaining consistent with an embodiment. The gNBs 180a, 180b, 180c may each include one or more transceivers for communicating with the WTRUs 102a, 102b, 102c over the air interface 116. In an embodiment, the gNBs 180a, 180b, 180c may implement MIMO technology. For example, gNBs 180a, 180b may utilize beamforming to transmit signals to and/or receive signals from the WTRUs 102a, 102b, 102c. Thus, the gNB 180a, for example, may use multiple antennas to transmit wireless signals to, and/or receive wireless signals from, the WTRU 102a. In an embodiment, the gNBs 180a, 180b, 180c may implement carrier aggregation technology. For example, the gNB 180a may transmit multiple component carriers to the WTRU 102a (not shown). A subset of these component carriers may be on unlicensed spectrum while the remaining component carriers may be on licensed spectrum. In an embodiment, the gNBs 180a, 180b, 180c may implement Coordinated Multi-Point (CoMP) technology. For example, WTRU 102a may receive coordinated transmissions from gNB 180a and gNB 180b (and/or gNB 180c).

The WTRUs 102a, 102b, 102c may communicate with gNBs 180a, 180b, 180c using transmissions associated with a scalable numerology. For example, OFDM symbol spacing and/or OFDM subcarrier spacing may vary for different transmissions, different cells, and/or different portions of the wireless transmission spectrum. The WTRUs 102a, 102b, 102c may communicate with gNBs 180a, 180b, 180c using subframe or transmission time intervals (TTIs) of various or scalable lengths (e.g., including a varying number of OFDM symbols and/or lasting varying lengths of absolute time).

The gNBs 180a, 180b, 180c may be configured to communicate with the WTRUs 102a, 102b, 102c in a standalone configuration and/or a non-standalone configuration. In the standalone configuration, WTRUs 102a, 102b, 102c may communicate with gNBs 180a, 180b, 180c without also accessing other RANs (e.g., such as eNode-Bs 160a, 160b, 160c). In the standalone configuration, WTRUs 102a, 102b, 102c may utilize one or more of gNBs 180a, 180b, 180c as a mobility anchor point. In the standalone configuration, WTRUs 102a, 102b, 102c may communicate with gNBs 180a, 180b, 180c using signals in an unlicensed band. In a non-standalone configuration WTRUs 102a, 102b, 102c may communicate with/connect to gNBs 180a, 180b, 180c while also communicating with/connecting to another RAN such as eNode-Bs 160a, 160b, 160c. For example, WTRUs 102a, 102b, 102c may implement DC principles to communicate with one or more gNBs 180a, 180b, 180c and one or more eNode-Bs 160a, 160b, 160c substantially simultaneously. In the non-standalone configuration, eNode-Bs 160a, 160b, 160c may serve as a mobility anchor for WTRUs 102a, 102b, 102c and gNBs 180a, 180b, 180c may provide additional coverage and/or throughput for servicing WTRUs 102a, 102b, 102c.

Each of the gNBs 180a, 180b, 180c may be associated with a particular cell (not shown) and may be configured to handle radio resource management decisions, handover decisions, scheduling of users in the UL and/or DL, support of network slicing, dual connectivity, interworking between NR and E-UTRA, routing of user plane data towards user plane functions (UPFs) 184a, 184b, routing of control plane information towards access and mobility management functions (AMPs) 182a, 182b, and the like. As shown in FIG. 1D, the gNBs 180a, 180b, 180c may communicate with one another over an Xn interface.

The CN 115 shown in FIG. 1D may include at least one AMF 182a, 182b, at least one UPF 184a, 184b, at least one session management function (SMF) 183a, 183b, and at least one Data Network (DN) 185a, 185b. While each of the foregoing elements are depicted as part of the CN 115, it will be appreciated that any of these elements may be owned and/or operated by an entity other than the CN operator.

The AMF 182a, 182b may be connected to one or more of the gNBs 180a, 180b, 180c in the RAN 113 via an N2 interface and may serve as a control node. For example, the AMF 182a, 182b may be responsible for authenticating users of the WTRUs 102a, 102b, 102c, support for network slicing (e.g., handling of different protocol data unit (PDU) sessions with different requirements), selecting a particular SMF 183a, 183b, management of the registration area, termination of non-access stratum (NAS) signaling, mobility management, and the like. Network slicing may be used by the AMF 182a, 182b, e.g., to customize CN support for WTRUs 102a, 102b, 102c based on the types of services being utilized by WTRUs 102a, 102b, 102c. For example, different network slices may be established for different use cases such as services relying on ultra-reliable low latency (URLLC) access, services relying on enhanced massive mobile broadband (eMBB) access, services for MTC access, and/or the like. The AMF 182a, 182b may provide a control plane function for switching between the RAN 113 and other RANs (not shown) that employ other radio technologies, such as LTE, LTE-A, LTE-A Pro, and/or non-3GPP access technologies such as Wi-Fi.

The SMF 183a, 183b may be connected to an AMF 182a, 182b in the CN 115 via an N11 interface. The SMF 183a, 183b may also be connected to a UPF 184a, 184b in the CN 115 via an N4 interface. The SMF 183a, 183b may select and control the UPF 184a, 184b and configure the routing of traffic through the UPF 184a, 184b. The SMF 183a, 183b may perform other functions, such as managing and allocating UE IP address, managing PDU sessions, controlling policy enforcement and QoS, providing downlink data notifications, and the like. A PDU session type may be IP-based, non-IP based, Ethernet-based, and the like.

The UPF 184a, 184b may be connected to one or more of the gNBs 180a, 180b, 180c in the RAN 113 via an N3 interface, which may provide the WTRUs 102a, 102b, 102c with access to packet-switched networks, such as the Internet 110, e.g., to facilitate communications between the WTRUs 102a, 102b, 102c and IP-enabled devices. The UPF 184a, 184b may perform other functions, such as routing and forwarding packets, enforcing user plane policies, supporting multi-homed PDU sessions, handling user plane QoS, buffering downlink packets, providing mobility anchoring, and the like.

The CN 115 may facilitate communications with other networks. For example, the CN 115 may include, or may communicate with, an IP gateway (e.g., an IP multimedia subsystem (IMS) server) that serves as an interface between the CN 115 and the PSTN 108. In addition, the CN 115 may provide the WTRUs 102a, 102b, 102c with access to the other networks 112, which may include other wired and/or wireless networks that are owned and/or operated by other service providers. In an embodiment, the WTRUs 102a, 102b, 102c may be connected to a local Data Network (DN) 185a, 185b through the UPF 184a, 184b via the N3 interface to the UPF 184a, 184b and an N6 interface between the UPF 184a, 184b and the DN 185a, 185b.

In view of FIGs. 1A-1D, and the corresponding description of FIGs. 1A-1D, one or more, or all, of the functions described herein with regard to any of: WTRUs 102a-d, base stations 114a-b, eNode-Bs 160a-c, MME 162, SGW 164, PGW 166, gNBs 180a-c, AMFs 182a-b, UPFs 184a-b, SMFs 183a-b, DNs 185a-b, and/or any other element(s)/device(s) described herein, may be performed by one or more emulation elements/devices (not shown). The emulation devices may be one or more devices configured to emulate one or more, or all, of the functions described herein. For example, the emulation devices may be used to test other devices and/or to simulate network and/or WTRU functions.

The emulation devices may be designed to implement one or more tests of other devices in a lab environment and/or in an operator network environment. For example, the one or more emulation devices may perform the one or more, or all, functions while being fully or partially implemented and/or deployed as part of a wired and/or wireless communication network in order to test other devices within the communication network. The one or more emulation devices may perform the one or more, or all, functions while being temporarily implemented/deployed as part of a wired and/or wireless communication network. The emulation device may be directly coupled to another device for purposes of testing and/or may performing testing using over-the-air wireless communications.

The one or more emulation devices may perform the one or more, including all, functions while not being implemented/deployed as part of a wired and/or wireless communication network. For example, the emulation devices may be utilized in a testing scenario in a testing laboratory and/or a non-deployed (e.g., testing) wired and/or wireless communication network in order to implement testing of one or more components. The one or more emulation devices may be test equipment. Direct RF coupling and/or wireless communications via RF circuitry (e.g., which may include one or more antennas) may be used by the emulation devices to transmit and/or receive data.

Throughout embodiments described herein the terms "base station", "network", "cell", and "gNB", collectively "the network" may be used interchangeably to designate any network element such as e.g., a network element acting as a serving base station. Embodiments described herein are not limited to gNBs and are applicable to any other type of base stations.

For the sake of clarity, satisfying, failing to satisfy a condition, and configuring condition parameter(s) are described throughout embodiments described herein as relative to a threshold (e.g., greater, or lower than) a (e.g., threshold) value, configuring the (e.g., threshold) value, etc. For example, satisfying a condition may be described as being above a (e.g., threshold) value, and failing to satisfy a condition may be described as being below a (e.g., threshold) value. Embodiments described herein are not limited to threshold-based conditions. Any kind of other condition and parameter(s) (such as e.g., belonging or not belonging to a range of values) may be applicable to embodiments described herein.

Throughout embodiments described herein, (e.g., configuration) information may be described as received by a WTRU from the network, for example, through system information or via any kind of protocol message. Although not explicitly mentioned throughout embodiments described herein, the same (e.g., configuration) information may be preconfigured in the WTRU (e.g., via any kind of pre-configuration methods such as e.g., via factory settings), such that this (e.g., configuration) information may be used by the WTRU without being received from the network.

Throughout embodiments described herein, the expression "the WTRU may be configured with a set of parameters" is equivalent or may be used interchangeably with "the WTRU may receive configuration information (e.g., from another network element (e.g., gNB)) indicating a set of parameters". Throughout embodiments described herein, the expressions "the WTRU may report something", and "the WTRU may be configured to report something", is equivalent or may be used interchangeably with "the WTRU may transmit (e.g., reporting) information indicating something". Throughout embodiments described herein, the expression "the WTRU may provide (/be provided) with a set of parameters (/something)" is equivalent or may be used interchangeably with "the WTRU may transmit (/receive) information indicating a set of parameters (/something)".

In embodiments described herein, "a" and "an" and similar phrases are to be interpreted as "one or more" and "at least one". Similarly, any term which ends with the suffix "(s)" is to be interpreted as "one or more" and "at least one". The term "may" is to be interpreted as "may, for example".

A symbol "/" (e.g., forward slash) may be used herein to represent "and/or", where for example, "A/B" may imply "A and/or B".

In embodiments described herein, "list of", "set of" and "one or more of" may be used interchangeably.

In embodiments described herein, "identity" and "identifier" may be used interchangeably to refer to how a network element (or a WTRU) may be identified.

In embodiments described herein, a network element may refer to any kind of device including computing resources and networking capabilities, that may be connected to a network. The terms network element and node may be used interchangeably. A network element may be any kind of network infrastructure device and or a WTRU. The architecture depicted at FIG. 1B for a WTRU 102 may be applicable more generally to any kind of network element.

In embodiments described herein, the terms device, terminal and WTRU may be used interchangeably to refer to any kind of device that may connect to any kind of network, such as e.g., a wireless network.

### Terminology

In embodiments described herein, a site refers to a location hosting computing/networking resources to provide (e.g., offer, run, execute) a service. A site may include one or more network elements that may be connected to the network and that may host one or more services.

In embodiments described herein, a service refers to a software functionality, or a set of software functionalities (such as e.g., the execution of a set of operations) that may be used by different clients. A service may be made available by a service provider by orchestrating a set of resources (e.g., any of networking, compute, storage, etc.). Which and how these resources may be solicited may be part of the service logic which may be internal to the service provider. For example, these resources may be any of (i) exposed by one or more processes, (ii) provided by any of virtual instances, physical instances, and a combination hereof, (iii) hosted within the same or distinct nodes, (iv) hosted within the same or multiple service sites, (v) chained to provide a service using a variety of means. The same service can be provided in multiple locations; where one (e.g., each) of them may represent a service instance.

In embodiments described herein, a service migration refers to the process of transferring data and/or processes associated with a service instance from one computing environment (e.g., of a first site) to another computing environment (e.g., of a second site).

In embodiments described herein, a point of attachment refers to a network element providing connectivity to a network. The connectivity may be provided, for example, at layer three (L3). Embodiments are described herein with the example of points of attachment providing connectivity to a network at the layer three. Embodiments described herein are not limited to L3 point of attachments. Any kind of points of attachment, providing connectivity to a network at any layer (e.g., data link layer, transport layer and above) are applicable to embodiments described herein.

In embodiments described herein, a traffic session refers to a flow of data packets that are associated with (e.g., belong to) a specific (e.g., running) service, flowing between a terminal and the instance providing the service.

In embodiments described herein, the terms sensor and sensor terminal may be used interchangeably.

In embodiments described herein, the terms networking and connectivity may be used interchangeably when associated with the terms condition, requirement or metric.

Embodiments are described herein with the example of sensing devices sending sensing data to a sensing service over a network. Embodiments described herein are not limited to sensing devices/services/data and are applicable any kind of services exchanging any kind of data with any kind of devices over any kind of network.

Embodiments are described herein with CATS requests/queries and CATS responses as examples of requests/queries and responses to exchange information between various network elements. Embodiments described herein are not limited to CATS requests/queries and CATS responses and are applicable any kind of requests and responses messages allowing to exchange information over the network.

Embodiments are described herein with CATS requirements and CATS conditions as examples of requirements and indications of whether one or more of the requirements are met. Any technique for determining that a networking/computing requirement is met in a network may be applicable to embodiments described herein. Embodiments described herein are not limited to CATS requirements and CATS conditions and are applicable any kind of requirements and indications of whether one or more of the requirements are met in the network.

### Overview of CATS Mobility

In an example, a sensor may be participating in an ongoing sensing service (such as e.g., fusing sensing measurements from different sensors and computing the sensing result) with corresponding connectivity and computing requirements. A site may have been selected to host the sensing service instance and the terminal may have been allocated an IP prefix for use with the sensing service, for steering the sensing traffic to meet the connectivity and computing requirements. At a point in time, the terminal may move, changing its point of attachment, which may involve updating the sensing traffic steering to follow the terminal movement.

The change of point of attachment may result in a higher network latency. This may trigger moving the sensing service instance and update the sensing traffic steering to continue meeting the computing and connectivity requirements of the ongoing sensing task.

The sensing terminal may be CATS aware or CATS unaware.

A sensing terminal may be attached to the network consuming a sensing service that may be running at a (e.g., given) site. Within the network (e.g., domain) there may be other sites capable of running instances of the same sensing service.

The sensing terminal may move to a different point of attachment, e.g., based on physical mobility of the sensor. The traffic steering may be updated to follow the current location of the sensing terminal.

The change in the point of attachment may result in an overall change of the network conditions. The conditions may be monitored by different entities, such as any of a CATS-aware sensing terminal, a CATS agent at the site serving the sensing service, and a CATS controller. The change of the monitored conditions may trigger migrating the sensing service to another site and updating the traffic steering accordingly.

An ingress CATS router (ICR) refers to the router to which the terminal may be attached/connected). An egress CATS router (ECR) refers to the router close to or at the site where the service instance may be running. When detecting the attachment of the sensing terminal, the ICR may evaluate current conditions to determine whether to move the sensing service to a different site, and to select a new ECR to anchor the IP address/prefix currently in use by the sensor consuming the sensing service and set up a new tunnel between the ICR (where the sensor may now be attached to) and the new ECR. In an example, the determination may (e.g., also) be made by a CATS controller, in which case the ICR may (e.g., only) execute the actions to update the tunnel.

Any of the egress CATS router (ECR) that was anchoring the prefix used by the sensing terminal before the change of point of attachment, or a new ECR selected based on the change in the conditions, may receive the IP address/prefix currently in use by the sensing terminal consuming the service and may provide anchoring services to that address prefix, establishing a tunnel with the ICR where the sensing terminal may be attached to.

If a new site was selected, the sensing service may be migrated to the new site.

Traffic may be steered between the sensing terminal and the (new) sensing service instance, meeting the computing and connectivity requirements of the sensing service.

### Compute and Traffic Steering

The Internet engineering task force (IETF) CATS working group addresses the problem of how the network infrastructure can steer traffic between clients of a service and sites offering the service, considering network metrics (such as any of bandwidth and latency), and compute metrics (such as any of processing, storage capabilities, and capacity).

Traffic steering may be applicable to examples such as integrated sensing and communications, where the sensing computation (e.g., sensor fusion) may not be performed by the sensor itself based on compute limitations. In these examples, the delay and the computing resources (e.g. required) for running the sensing service may be applicable.

### Use Case Scenario

In an example use case, a sensing terminal may be participating in an ongoing sensing task, that may involve other sensing terminals. Sensing is described herein as an example of service, any other types of services and terminals using compute and connectivity traffic steering may be applicable to embodiments described herein. The sensing task may involve (e.g., require) some computing capabilities that may not be available at the (e.g., given) sensing terminal. These computing capabilities may be sourced from other sensing terminals or the network. This may involve some requirements on the connectivity (e.g., delay between the sensing terminal and the node where the service may be executed in the network) and computing resources (e.g., capabilities to perform fusion of different sensing data within a (e.g., certain) latency budget). Within the network domain where the sensing terminal is connected to, there may be multiple sites capable of hosting the sensing service, (e.g., each) with potentially different connectivity and computing characteristics.

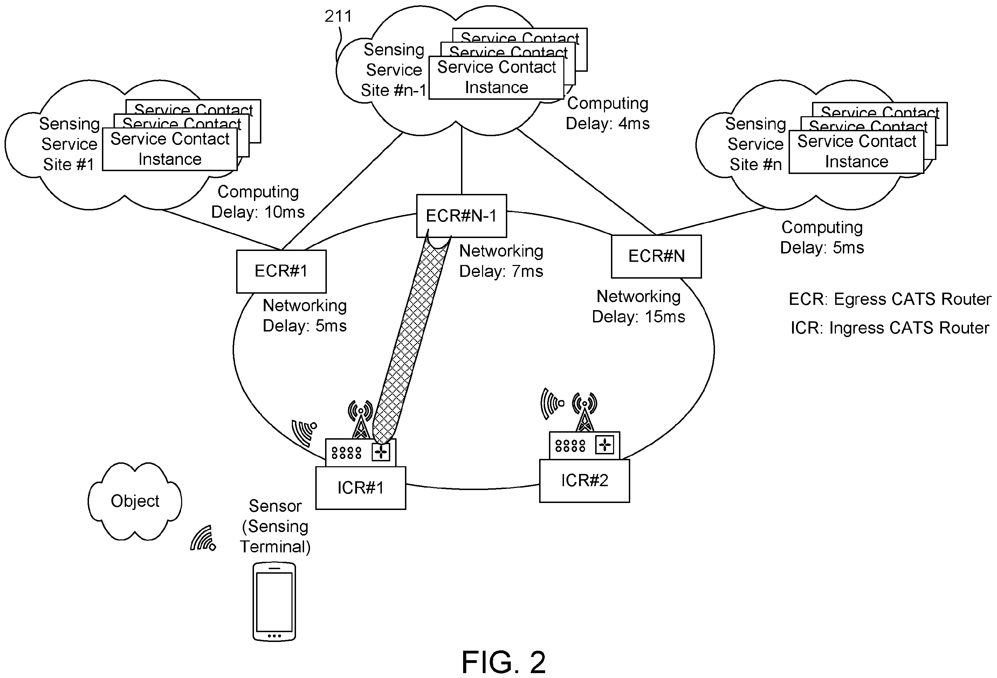

FIG. 2 is a diagram illustrating an exemplary scenario. Considering the connectivity and computing latencies (as an example of metrics), the best (e.g., selected) sensing service site may be #n-1 as shown at 211.

Distributed sensing systems do not have the capability to dynamically change the node where the sensing traffic may be processed, so the sensing traffic can be steered in accordance with the dynamically changing connectivity and computing conditions, including those triggered by sensors' mobility and/or sensed objects' mobility. Current mobility solutions mainly take into consideration connectivity characteristics when taking mobility decisions. Mobility solutions jointly considering computing and networking are described herein.

Embodiments described herein propose techniques to enable the network to react and adapt to the change in connectivity and computing conditions caused by a sensing terminal change of point of attachment, which may (e.g., also) trigger (e.g., optimal) sensing service migration based on service-specific IP anchor mobility.

Mechanisms to be implemented by the network to facilitate CATS-enabled sensor mobility are described herein, such that the requirements of the sensing service in terms of computing and networking may be (e.g., simultaneously) fulfilled.

Embodiments described herein describe how to steer traffic between sensing terminals and the sensing service computing site, after sensor's mobility, and how to re-evaluate - upon sensor's mobility - if service relocation is to be performed, in a transparent manner to the sensor, by using IP anchor mobility.

New procedures for a sensing terminal connected to a network infrastructure are described herein, providing mobility support while adapting to specific connectivity and computing requirements, so traffic may (e.g., always) be steered to the best sensing service instance meeting any of connectivity and computing requirements. Both CATS-aware and CATS-unaware terminals are considered herein.

### Enabling Sensing Terminal Mobility with IP Anchor Mobility for CATS

Enabling sensing terminal mobility with IP anchor mobility for CATS is described herein.

Examples of operation and signaling for the network to perform sensing terminal mobility are described herein. Three different examples are described herein, for variations of the procedures, which are referred to as sensor-aided, ICR-aided, and CATS-controller aided (e.g., also respectively referred to as option A, B and C).

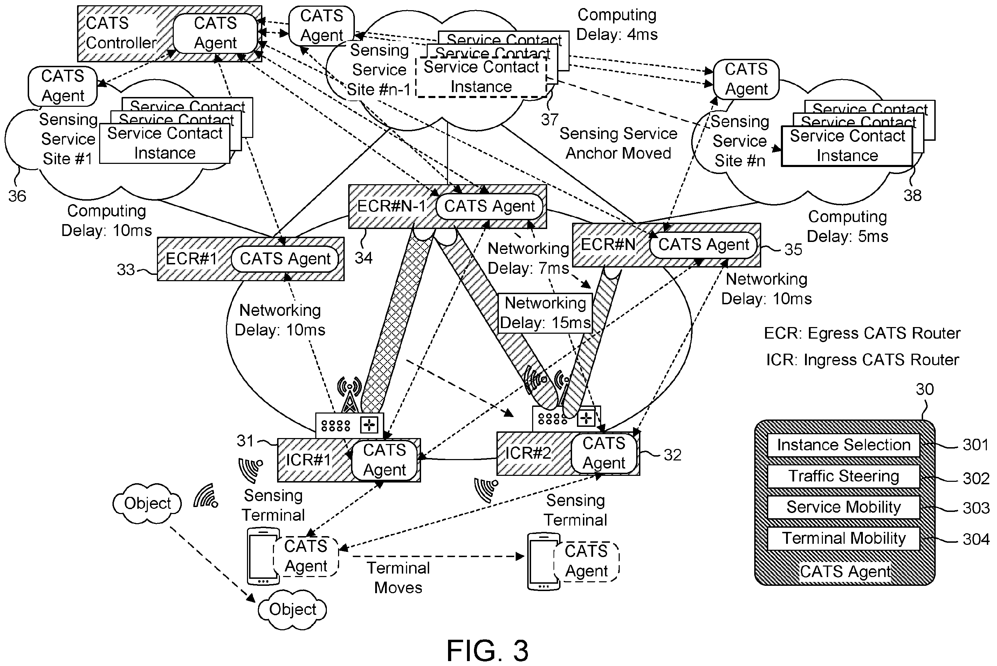

FIG. 3 is a diagram illustrating an example architecture. The presence of a CATS controller and of a CATS agent at the terminal are optional, and may depend on the specific deployment/solution scenario (e.g., A/B/C).

In an example, a CATS agent 30 is defined to run on the ingress router 31 32 (e.g., the router to which the terminal is attached to), the egress router 33, 34, 35 (e.g., a router close to or at the site where the service instance is running), and also at the sites 36, 37, 38 capable of instantiating services. For example, the CATS agent functionality can also run on the terminal to aid the network decision or actively influence the site selection.

The CATS agent 30 may have the following functionality: (i) instance selection engine 301, (ii) traffic steering engine 302, service mobility engine 303 and terminal mobility engine 304. The instance selection engine 301 may deal with the procedures relating to performing service and terminal specific instance selection. For example, ICRs, ECRs, and sites may use this functionality so they can exchange information to aid selecting the best site to instantiate a given service instance. For example, a terminal might also run this engine, to actively participate in the selection process.

The traffic steering engine 302 may deal with the ICR and ECR selection and the associated traffic steering between them, in order to meet the connectivity and computing requirements of the service. This functionality might be present at CATS agents 30 running at ICRs 31, 32 and ECRs 33, 34, 35.

The service mobility engine 303 and terminal mobility engine 304 may deal with the procedures to (i) detect or predict a change of the current conditions due to a change in the point of attachment, jointly considering computing and networking, requiring of a service mobility operation; (ii) deciding whether a change of service instance location is to be performed, and, if so, selecting the (e.g., best) target service instance location and triggering the service migration, and (iii) ensuring that traffic is steered to the new point of attachment of the terminal. For example, a terminal or ICR may use this functionality to predict terminal mobility and prepare the network in advance, in cooperation with other CATS agents running at the current ICR, ECR and/or service site. They may also be used to perform the actual terminal mobility.

### Option A: Device Aided

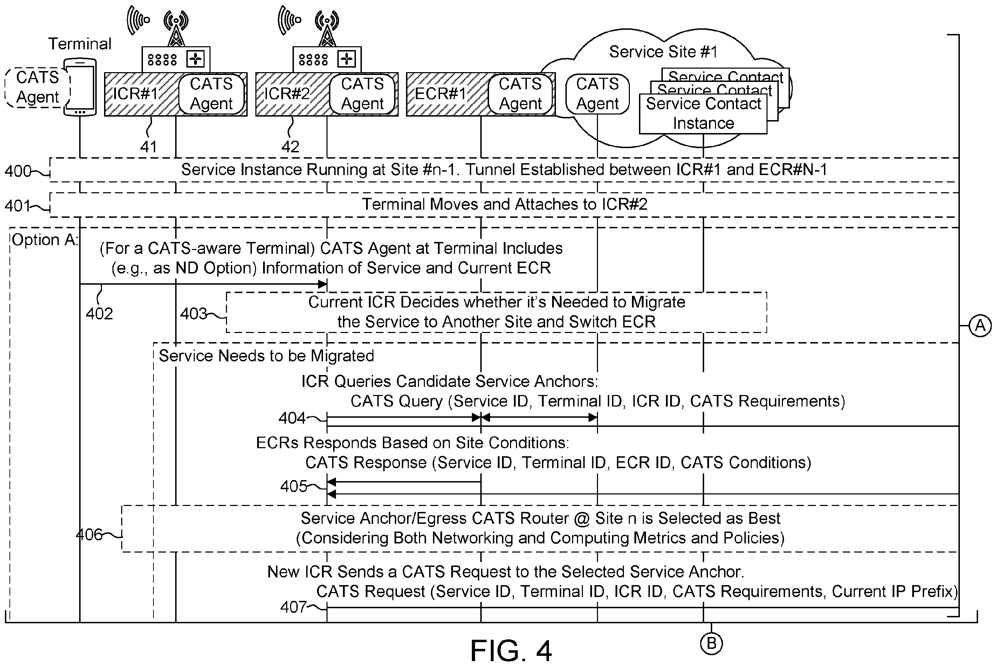

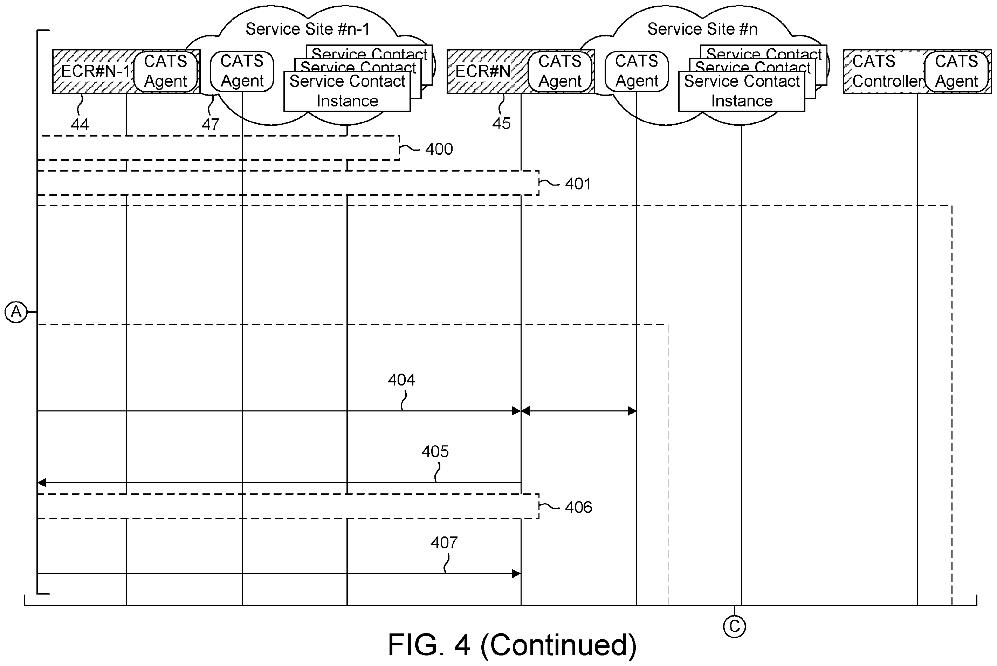

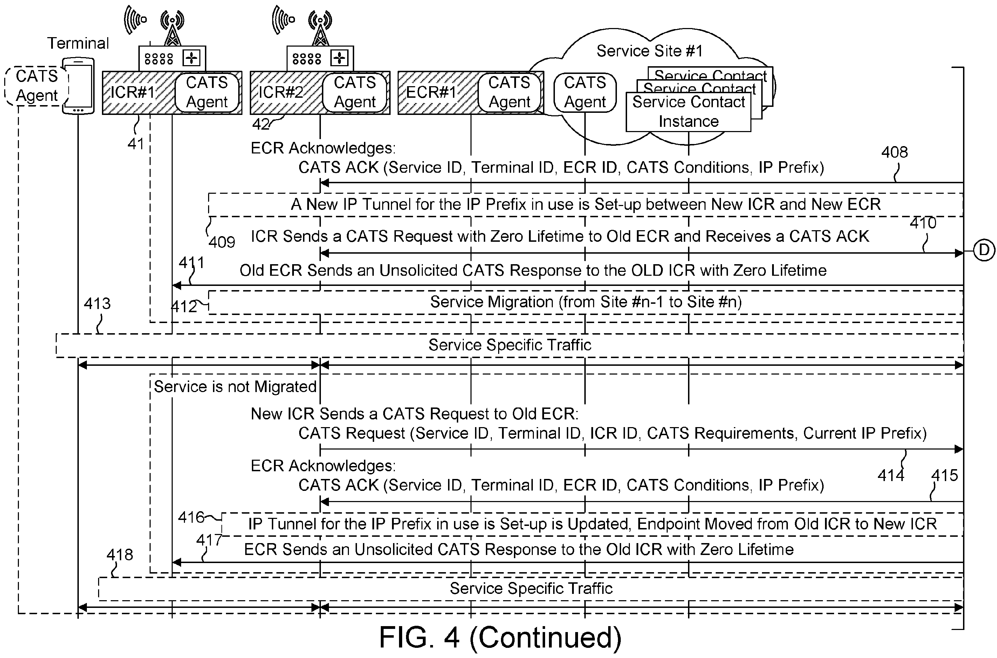

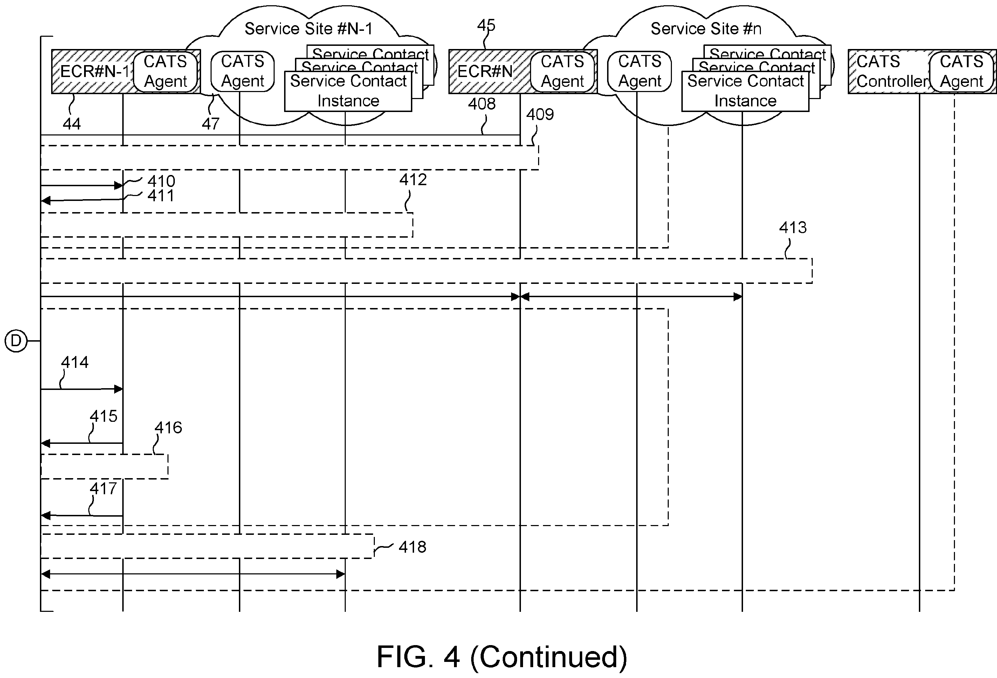

An example signaling for terminal mobility with IP anchor mobility for CATS, aided by a CATS-aware device is described herein. In an example, the device may be a sensing terminal. FIG. 4 is a diagram illustrating an example signaling of sensing terminal mobility with IP anchor mobility for CATS, aided by a CATS-aware sensing terminal.

In a sensor aided example, sensing terminal mobility may be triggered by a CATS-aware sensor. A CATS agent running on the sensing terminal may perform different monitoring actions to predict or detect the need to migrate a sensing service from one site to another. This CATS agent may, for example, interact with other CATS agents deployed on ICRs, ECRs and sensing service sites.

In the following, a sensing terminal mobility procedure for CATS is described, aided by a CATS-aware terminal. Using the sensing terminal support, the network infrastructure may be capable of steering the traffic to the new location of the sensing terminal, and (e.g., if required) select a target service instance meeting the connectivity and computing requirements of the service. The mobility of the sensing terminal, and the potential service migration, may be performed with signaling procedures transparent for the sensing terminal.

FIG. 4 shows a message sequence chart of the terminal mobility for CATS, aided by a CATS-aware sensing terminal (OPTION A), which is described herein.

As shown at 400, a sensing service may have already been instantiated on a service site. In the illustrated example, the site where the sensing service consumed by the terminal may be currently (e.g., initially) instantiated is site #n-1 47. The terminal may be connected to ICR #1 41 and a service tunnel may have been established between ICR#1 41 and ECR#N-1 44. This sensing service may be associated with some functionality to be run on the network infrastructure (e.g., sensor fusion or processing of sensing data). This sensing service may have specific requirements in terms of any of connectivity and computing (CATS requirements).

As shown at 401, the sensing terminal may move to a new ICR, changing its point of attachment from ICR#1 41 to ICR#2 42.

As shown at 402, the sensing terminal which may be CATS-aware, may provide additional information to the new ICR, such as, for example, the ECR that may currently be used for the active service flow(s). In an example, the additional information may further indicate compute/networking requirements of the service. Any mechanisms, e.g., including using extensions at IPv6 neighbor discovery (ND) level (e.g., in any of a neighbor solicitation (NS) and a router solicitation (RS)), or at layer-2 may be used to send information to the (e.g., new) ICR#2 41 indicating any of the current ECR#N-1 44, and compute/networking requirements associated with the service.

As shown at 403, the current/new ICR (ICR#2 42 in this example) may determine whether a change of sensing service site (and serving ECR) is to be performed or not, based on the compute/networking conditions at the new location of the terminal (e.g., at ICR#2 42), and the (e.g., compute/networking) requirements of the service. It may be determined that (1) the sensing service is to be migrated based on the required (compute/networking) conditions not being met at the current location or (2) the service is not to be migrated (based on the required (compute/networking) conditions being met at the current location), and the traffic is to be steered to the new ICR 42 from the currently serving ECR#N-1 44.

Process and operations when the service is determined to be migrated are described herein.

As shown at 404, the ICR 42 may send a query to all (excluding currently used) ECRs of the domain, or a subset selected based on the location of the ICR. This query may include/indicate any of (i) a service identifier (ID) (e.g., an identifier of the service requested by the sensing terminal, e.g., allowing to check if the service can be instantiated or is already instantiated), (ii) a terminal ID (e.g., an identifier of the sensor requesting the sensing service, which may be useful e.g., for affinity purposes, and which may not include information that can be used to identify the user), (iii) an ICR ID (e.g., an identifier of the requesting ICR), and (iii) CATS requirements (e.g., as a list of requirements, e.g., any of connectivity and computing requirements).

As shown at 405, a (e.g., each) ECR, for example, after checking with the CATS agent of the site(s) providing connectivity, may respond back to the ICR, including/indicating any of (i) a service ID, (ii) a terminal ID, (iii) an ECR ID (e.g., identifier of the ECR sending the response), (iv) CATS conditions (e.g., indicating how the site meets (e.g., each of) the CATS requirements included in the request, and (v) an uniform resource identifier (URI) to get to the service instance. A CATS agent at a site may be collocated with the ECR. Examples of a CATS agent at a site may include network controllers or orchestrators at the site. A CATS agent at an ECR may interact with the CATS agent of the site according to any mechanism. Examples include using monitoring and telemetry interfaces with an orchestrator managing the site.

As shown at 406, based on the received responses, and based on any of networking and computing metrics and policies, the ICR 42 may select an ECR (#n) 45.

As shown at 407, the ICR 42 may request the proposed/selected ECR(#n) 45 to establish a traffic steering session with it, by sending a CATS request. This CATS request may include the same information that may have been included in the CATS query (to enable stateless operation of the ECRs while being queried), and any of following additional parameters: (i) an ECR prefix (e.g., IP prefix currently used by the sensing terminal to reach the service instance) and (ii) a lifetime (e.g., requested duration for the association between the ICR and the ECR).

As shown at 408, the selected ECR 45 may respond back with (e.g., send) an acknowledgement, including any of (i) a service ID, a terminal ID, (iii) an ECR ID (e.g., identifier of the ECR sending the response), (iv) CATS conditions (e.g., indicating how the site meets (e.g., each of) the requirements included in the request, (v) the IP prefix assigned for the terminal to use to reach the service instance (e.g., matching the one included in the request) and (vi) a lifetime (e.g., granted duration of the association between the ICR and the ECR).

As shown at 409, an IP tunnel may be established between the ICR 42 and the new ECR 45. In an example, (not shown in FIG. 4), the ICR 42 may send a CATS request with zero lifetime to the old ECR 44 to remove the old tunnel.

An IP tunnel may be established between the new ICR 42 and the selected ECR 45. Establishing an IP tunnel may involve some local configuration at both endpoints of the tunnel (new ICR 42 and selected ECR 45), such as, for example, configuring a new logical tunnel interface, configuring local and remote IP addresses and configuring the IP forwarding so the data packets of the service are encapsulated through this new IP tunnel. Forwarding may be setup so that traffic going from/to the allocated IP prefix may be sent through the tunnel at the ICR/ECR. Additional configurations related to the treatment of the packets (e.g., QoS related like queue priorities) may be performed, according to the CATS requirements of the service and the local policies at the network element.

As shown at 410, the ICR 42 may send a CATS request message to the old ECR 44 indicating to remove the state associated with the sensing terminal and service. The old ECR 44 may send a CATS acknowledge (ACK) to the new ICR 42.

As shown at 411, the old ECR 44 (ECR#n-1 in this example) may send an unsolicited CATS response to the old ICR 41 (ICR#1 in this example), indicating to remove the associated state.

As shown at 412, the service migration may be performed (e.g., from site #n-1 to site #n). In an example, the service migration may be triggered by the message shown at 410. Any kind of service migration according to any mechanism is applicable to embodiments described herein. It is noted that some preparation/migration steps may be conducted in parallel to accelerate the process, making operation shown at 410 and 412 the final trigger for the service migration.

At site #n, the prefix used by the terminal for accessing the service may be configured to be used by the migrated instance. Routing updates may be performed in the site, for example, controlled by a CATS agent running in the site.

As shown at 413, traffic of the service for this sensing terminal may be steered using the new IP tunnel.

Process and operations when the service is determined to not be migrated are described herein.

As shown at 414, the new ICR 42 may request the ECR 44 to update the existing traffic steering session, by sending a CATS request. This CATS request may include/indicate any of a (i) service ID, a (ii) terminal ID, (iii) an ICR ID, (iv) CATS requirements (e.g., list of requirements, e.g., any of connectivity and computing requirements), (v) an ECR prefix (e.g., IP prefix currently used by the terminal to reach the service instance), and (vi) a lifetime (e.g., requested duration for the association between the ICR 42 and the ECR 44).

As shown at 415, the ECR may respond back with (e.g., send) an acknowledgement, including any of (i) a service ID, (ii) a terminal ID, (iii) an ECR ID (e.g., identifier of the ECR sending the response), (iv) CATS conditions indicating how the site meets (e.g., each of) the requirements included in the request, (v) the IP prefix assigned for the sensing terminal to use to reach the service instance (e.g., matching the one included in the request), and a lifetime (e.g., granted duration of the association between the ICR 42 and the ECR 44).

As shown at 416, the IP tunnel may be updated, to be established between the new ICR 42 and the ECR 44.

As shown at 417, the ECR 44 may send an unsolicited CATS response with zero lifetime to the old ICR 41 to remove state associated with the old tunnel.

As shown at 418, traffic of the service for this sensing terminal may be steered using the updated IP tunnel.

### Option B: ICR Aided

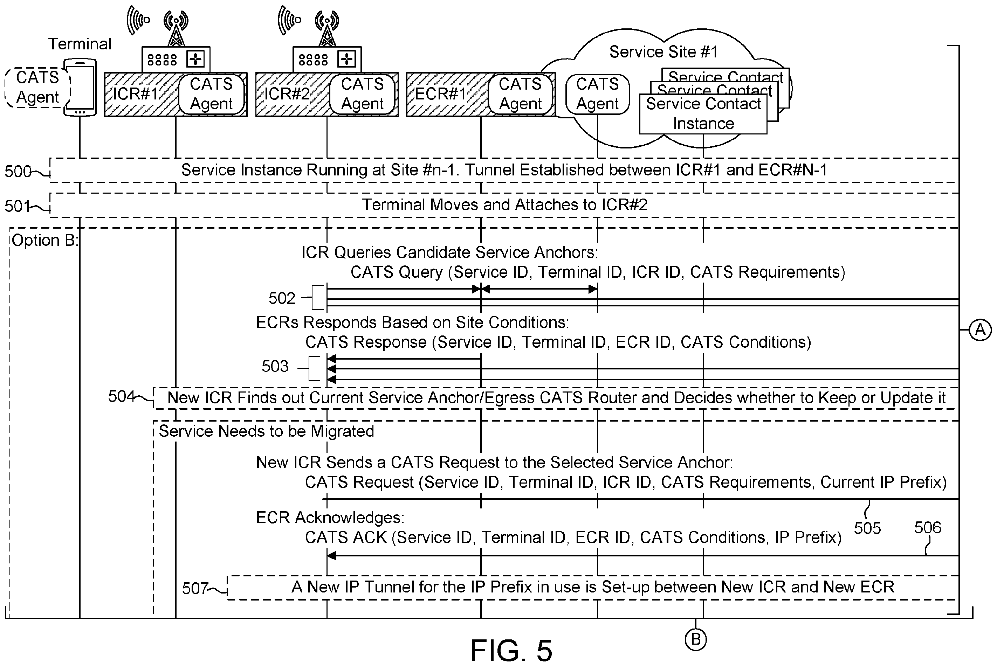

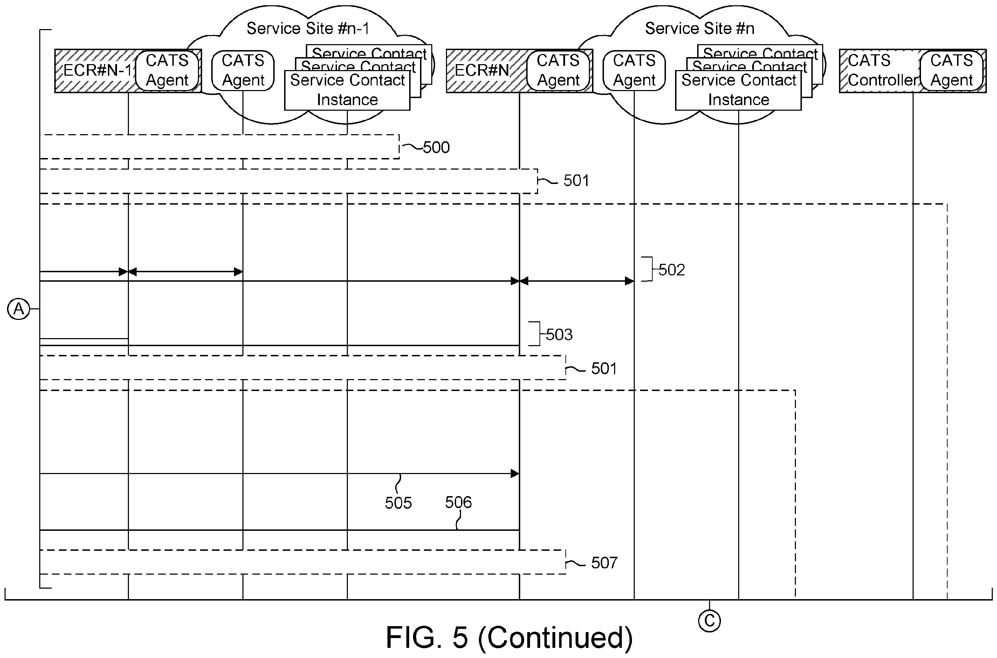

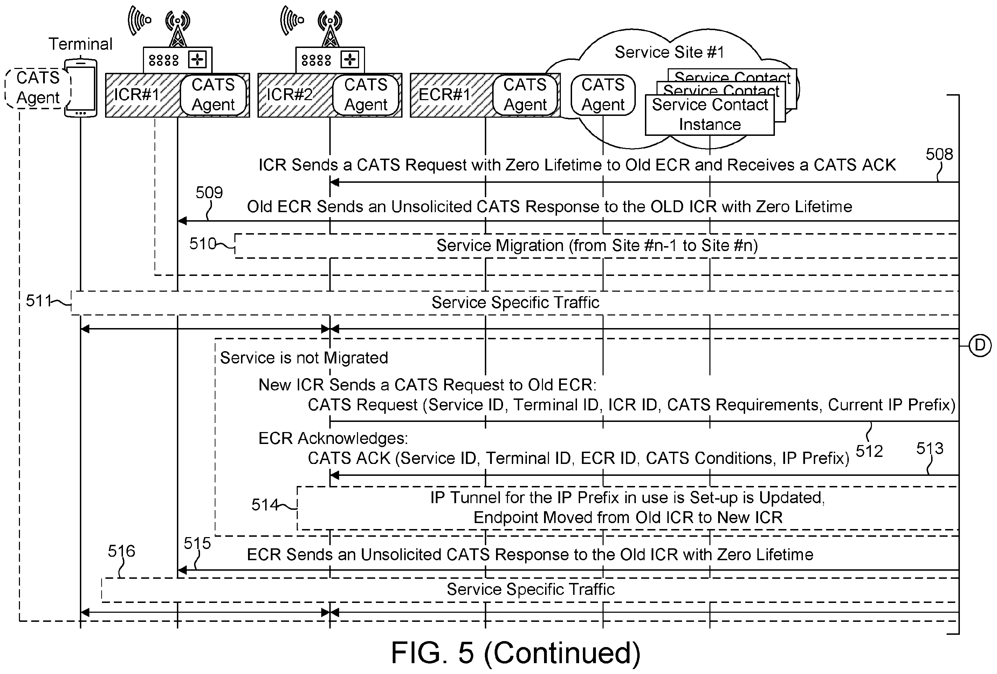

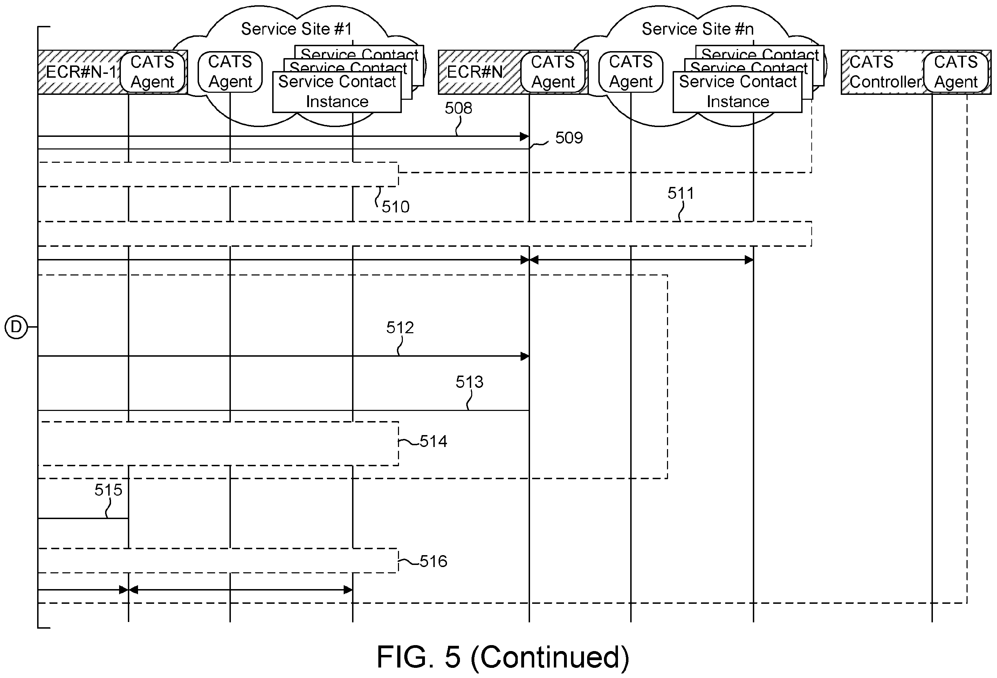

FIG. 5 is a diagram illustrating an example signaling of sensing terminal mobility with IP anchor mobility for CATS, aided by the ICR.

In the following, a sensing terminal mobility procedure for CATS is described, aided by the new ICR where the sensing terminal may attach to. The network infrastructure may be capable of steering the traffic to the new location of the sensing terminal, and (e.g., if required) select a target service instance meeting the connectivity and computing requirements of the service. The mobility of the sensing terminal, and the potential service migration, may be performed with signaling procedures transparent for the sensing terminal.

FIG. 5 shows a message sequence chart of the IP anchor mobility for CATS, initiated by the ICR (OPTION B), which is described herein.

As shown at 500, a sensing service may have been already instantiated on a service site. In the illustrated example, the site where the sensing service consumed by the terminal may be currently (e.g., initially) instantiated is site #n-1. The terminal may be connected to ICR #1 and a service tunnel may have been established between ICR#1 and ECR#N-1. This sensing service may be associated with some functionality to be run on the network infrastructure (e.g., sensor fusion or processing of sensing data). This sensing service may have specific requirements in terms of any of connectivity and computing (CATS requirements).

As shown at 501, the sensing terminal may move to a new ICR, changing its point of attachment from ICR#1 to ICR#2.

In the ICR aided example, the new ICR, where the sensing terminal may attach, (ICR#2) may detect the attachment. The new ICR may not know (e.g., be aware of) the ECR associated with the sensing service(s) active on the terminal (e.g., prior to migration).

As shown at 502, the new ICR may send a query to (e.g., all of) a plurality of ECRs of the domain, or a subset selected based on the location of the new ICR. This query may include/indicate any of (i) (if known) a service identifier (ID) (e.g., an identifier of the service requested by the sensing terminal, e.g., allowing to check if the service can be instantiated or is already instantiated), (ii) a terminal ID (e.g., an identifier of the sensor requesting the sensing service, which may be useful e.g., for affinity purposes, and which may not include information that can be used to identify the user), (iii) an ICR ID (e.g., an identifier of the requesting ICR), and (iii) CATS requirements (e.g., as a list of requirements, e.g., any of connectivity and computing requirements).

As shown at 503, a (e.g., each) ECR, for example, after checking with the CATS agent of the site(s) providing connectivity, may respond back to the ICR, including/indicating any of (i) a service ID, (ii) a terminal ID, (iii) an ECR ID (e.g., identifier of the ECR sending the response), (iv) CATS conditions (e.g., indicating how the site meets (e.g., each of) the CATS requirements included in the request, (v) an indication of (e.g., a flag indicating) whether the ECR is actually serving the indicated terminal and service, and (vi) an URI to get to the service instance.

As shown at 504, based on the information received, the new ICR may find out (e.g., determine) which is the currently serving ECR and whether the site where the sensing service is currently instantiated (e.g., still) meets the required QoS (e.g., the CATS requirements associated with the service). If the CATS requirements associated with the service are still met between the site and the new ICR, the service may be determined to not be migrated and the traffic may be to be steered to the new ICR from the currently serving ECR). If the CATS requirements associated with the service are not met between the site and the new ICR, a new site may have to be selected (implying a change of ECR and a service migration), based on the required conditions not being met at the current location.

Process and operations when the service is determined to be migrated are described herein.

As shown at 505, the new ICR may request the selected ECR to establish a traffic steering session with it, by sending a CATS request. This CATS request may include the same information that may have been included in the CATS query (to enable stateless operation of the ECRs while being queried), and any of following additional parameters: (i) an ECR prefix (e.g., IP prefix currently used by the sensing terminal to reach the service instance) and (ii) a lifetime (e.g., requested duration for the association between the ICR and the ECR).

As shown at 506, the selected ECR may respond back with (e.g., send) an acknowledgement, including any of (i) a service ID, a terminal ID, (iii) an ECR ID (e.g., identifier of the ECR sending the response), (iv) CATS conditions (e.g., indicating how the site meets (e.g., each of) the requirements included in the request, (v) the IP prefix assigned for the terminal to use to reach the service instance (e.g., matching the one included in the request) and (vi) a lifetime (e.g., granted duration of the association between the ICR and the ECR).

As shown at 507, an IP tunnel may be established between the ICR and the new ECR. Forwarding may be setup so that traffic going from/to the allocated IP prefix maybe sent through the tunnel at the ICR/ECR.

As shown at 508, the new ICR may send a CATS request message to the old ECR indicating to remove the state associated with the sensing terminal and service. The old ECR may send a CATS ACK to the new ICR.

As shown at 509, the old ECR (ECR#n-1 in this example) may send an unsolicited CATS response to the old ICR (ICR#1 in this example), indicating to remove the associated state.

As shown at 510, the service migration may be performed (e.g., from site #n-1 to site #n). In an example, the service migration may be triggered by the message shown at 508. Any kind of service migration according to any mechanism is applicable to embodiments described herein. It is noted that some preparation/migration steps may be conducted in parallel to accelerate the process, making operation shown at 508 and 510 the final trigger for the service migration.

At site #n, the prefix used by the terminal for accessing the service may be configured to be used by the migrated instance. Routing updates may be performed in the site, for example, controlled by a CATS agent running in the site.

As shown at 511, traffic of the service for this sensing terminal may be steered using the new IP tunnel.

Process and operations when the service is determined to not be migrated are described herein.

As shown at 512, the new ICR may request the ECR to update the existing traffic steering session, by sending a CATS request. This CATS request may include/indicate any of (i) a service ID, (ii) a terminal ID, (iii) an ICR ID, (iv) CATS requirements (e.g., list of requirements, e.g., any of connectivity and computing requirements), (v) an ECR prefix (e.g., IP prefix currently used by the terminal to reach the service instance), and (vi) a lifetime (e.g., requested duration for the association between the ICR and the ECR).

As shown at 513, the ECR may respond back with (e.g., send) an acknowledgement, including any of (i) a service ID, (ii) a terminal ID, (iii) an ECR ID (e.g., identifier of the ECR sending the response), (iv) CATS conditions indicating how the site meets (e.g., each of) the requirements included in the request, (v) the IP prefix assigned for the sensing terminal to use to reach the service instance (e.g., matching the one included in the request), and a lifetime (e.g., granted duration of the association between the ICR and the ECR).

As shown at 514, the IP tunnel may be updated, to be established between the new ICR and the ECR.

As shown at 515, the ECR may send an unsolicited CATS response with zero lifetime to the old ICR to remove state associated with the old tunnel.

As shown at 516, traffic of the service for this sensing terminal may be steered using the updated IP tunnel.

### Option C: CATS Controller Aided

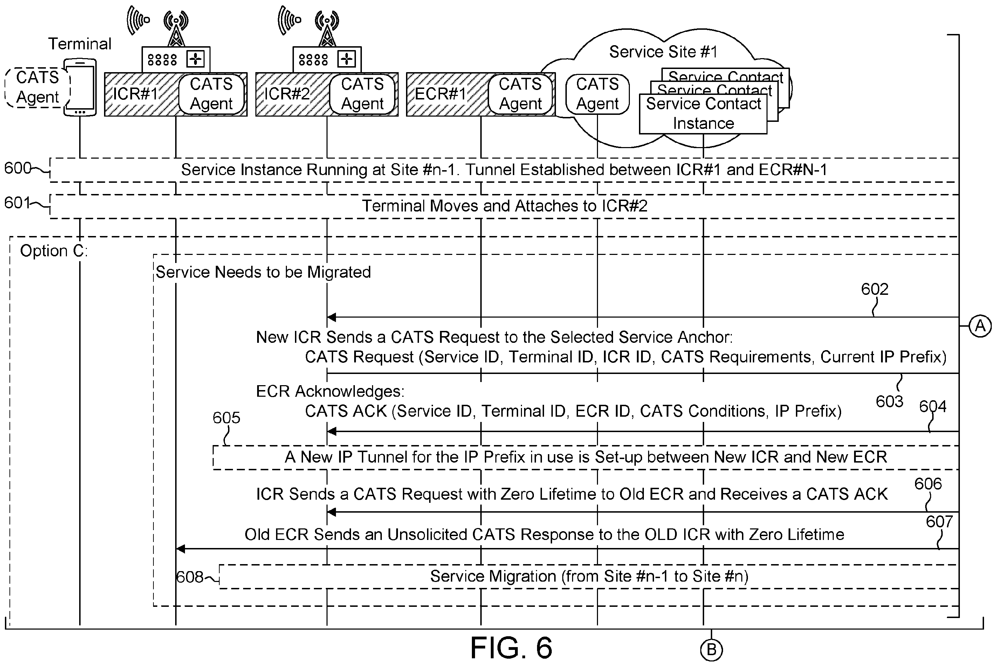

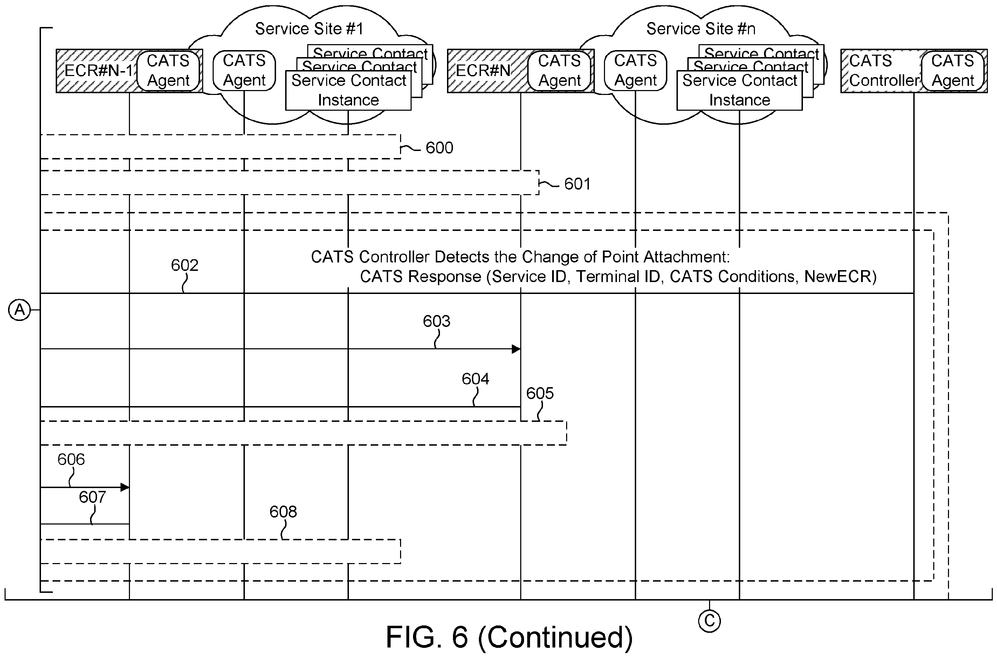

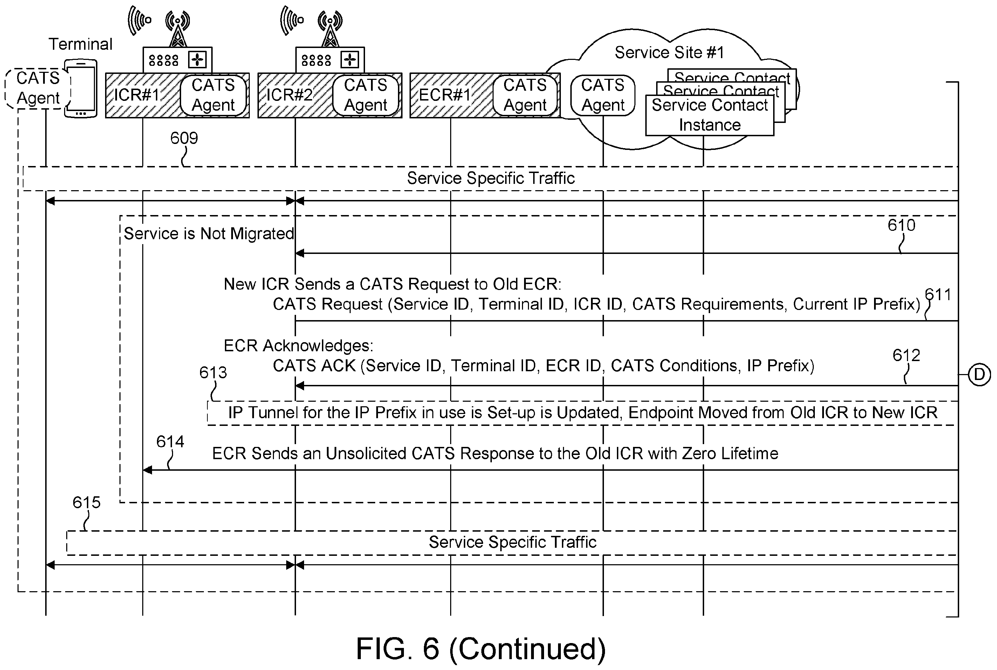

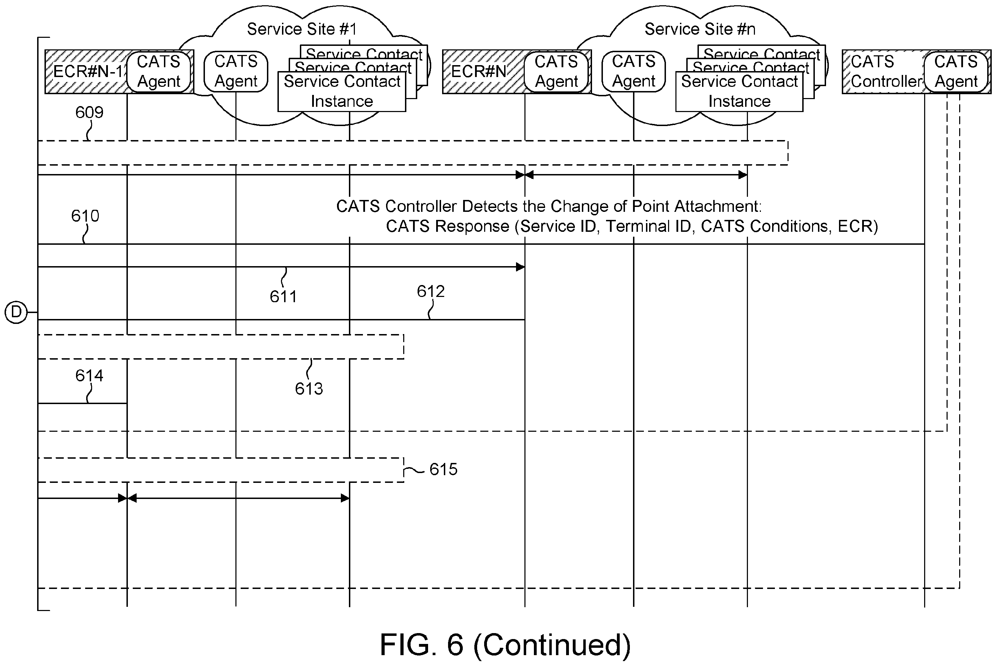

FIG. 6 is a diagram illustrating an example signaling of sensing terminal mobility with IP anchor mobility for CATS, aided by a CATS controller network element.

In the following, a sensing terminal mobility procedure for CATS is described, aided (e.g., and initiated) by a CATS controller. The network infrastructure may be capable of steering the traffic to the new location of the sensing terminal, and (e.g., if required) select a target service instance meeting the connectivity and computing requirements of the service. The mobility of the sensing terminal, and the potential service migration, may be performed with signaling procedures transparent for the sensing terminal.

FIG. 6 shows a message sequence chart of the terminal mobility for CATS, initiated by a CATS controller (OPTION C), which is described herein.

As shown at 600, a sensing service may have been already instantiated on a service site. In the illustrated example, the site where the sensing service consumed by the terminal may be currently (e.g., initially) instantiated is site #n-1. The terminal may be connected to ICR #1 and a service tunnel may have been established between ICR#1 and ECR#N-1. This sensing service may be associated with some functionality to be run on the network infrastructure (e.g., sensor fusion or processing of sensing data). This sensing service may have specific requirements in terms of any of connectivity and computing (CATS requirements).

As shown at 601, the sensing terminal may move to a new ICR, changing its point of attachment from ICR#1 to ICR#2.

In the CATS controller aided example, the CATS controller may detect the change of point of attachment. Any method for detecting that a sensing terminal may have changed of point of attachment is compatible with embodiments described herein. The CATS controller, which may have an overall view of the network, e.g., including the network status and the requirements of the service running on the sensing terminal, may evaluate if the sensing service is to be migrated or not.

Process and operations when the service is determined to be migrated are described herein.

As shown at 602, The CATS controller, which may have the overall view of (e.g., all) the sites and ECRs of the domain, may select site #n based on any of the networking and computing metrics and policies and may send an (e.g., unsolicited CATS) response to the ICR, including/indicating any of (i) a service ID (e.g., of the service to be migrated), (ii) a terminal ID (e.g., associated with the service to be migrated), (iii) CATS conditions indicating how the site meets the service requirements, and (iv) a new ECR (e.g., IP address of the new ECR, selected for service migration). In an example, information included in the (e.g., unsolicited CATS) response, such as e.g., the CATS conditions indicating how the site meets the service requirements may be conveyed back to the sensing terminal, such that adaptations may be (e.g., also) performed at service/application level.

As shown at 603, the ICR may request the selected ECR to establish a traffic steering session with it, by sending a CATS request for an ongoing service that is to be migrated. This CATS request may include/indicate any of (i) a service ID (e.g., an identifier of the service being consumed by the terminal - this may allow checking if the service can be instantiated or is already instantiated, which may be used for the service migration), (ii) a terminal ID (e.g., an identifier of the sensing terminal requesting the service), (iii) an ICR ID (e.g., identifier of the requesting ICR), (iv) CATS requirements (e.g., a list of (e.g., connectivity and computing) requirements), (v) an ECR prefix (e.g., IP prefix currently used by the sensing terminal to reach the service instance) and (vi) a lifetime (e.g., requested duration for the association between the ICR and the ECR).

As shown at 604, the selected ECR may respond back with (e.g., send) an acknowledgement, including any of (i) a service ID, a terminal ID, (iii) an ECR ID (e.g., identifier of the ECR sending the response), (iv) CATS conditions (e.g., indicating how the site meets (e.g., each of) the requirements included in the request, (v) the IP prefix assigned for the terminal to use to reach the service instance (e.g., matching the one included in the request) and (vi) a lifetime (e.g., granted duration of the association between the ICR and the ECR).

As shown at 605, a new IP tunnel may be established between the ICR and the new ECR. An IP tunnel may be established between the ICR and the selected ECR. Forwarding may (e.g., also) be setup so that traffic going from/to the allocated IP prefix may be sent through the tunnel at the ICR/ECR.

As shown at 606, the ICR may send a CATS request message to the old ECR indicating to remove the state associated with the sensing terminal and service. The old ECR may send a CATS ACK to the new ICR.

As shown at 607, the old ECR (ECR#n-1 in this example) may send an unsolicited CATS response to the old ICR (ICR#1 in this example), indicating to remove the associated state.

As shown at 608, the service migration may be performed (e.g., from site #n-1 to site #n). In an example, the service migration may be triggered by the message shown at 603. Any kind of service migration according to any mechanism is applicable to embodiments described herein. It is noted that some preparation/migration steps may be conducted in parallel to accelerate the process, making operation shown at 608 and 603 the final trigger for the service migration.

At site #n, the prefix used by the terminal for accessing the service may be configured to be used by the migrated instance. Routing updates may be performed in the site, for example, controlled by a CATS agent running in the site.

As shown at 609, traffic of the service for this sensing terminal may be steered using the new IP tunnel.

Process and operations when the service is determined to not be migrated are described herein.

As shown at 610, the CATS controller, which may have the overall view of (e.g., all) the sites and ECRs of the domain, considering any of networking and computing metrics and policies, may decide (e.g. determine) to keep on using site #n-1 and may send an (e.g., unsolicited CATS) response to the ICR, including/indicating any of (i) a service ID, (ii) a terminal ID, (iii) CATS conditions indicating how the site meets the sensing service requirements, and (iv) ECR (e.g., IP address of the current ECR). In an example, the CATS conditions indicating how the site meets the sensing service requirements may be conveyed back to the terminal, such that adaptations may be (e.g., also) made at service/application level.

As shown at 611, the new ICR may request the ECR to update the existing traffic steering session, by sending a CATS request. This CATS request may include/indicate any of (i) a service ID, (ii)a terminal ID, (iii) an ICR ID, (iv) CATS requirements (e.g., list of requirements, e.g., any of connectivity and computing requirements), (v) an ECR prefix (e.g., IP prefix currently used by the terminal to reach the service instance), and (vi) a lifetime (e.g., requested duration for the association between the ICR and the ECR).

As shown at 612, the ECR may respond back with (e.g., send) an acknowledgement, including any of (i) a service ID, (ii) a terminal ID, (iii) an ECR ID (e.g., identifier of the ECR sending the response), (iv) CATS conditions indicating how the site meets (e.g., each of) the requirements included in the request, (v) the IP prefix assigned for the sensing terminal to use to reach the service instance (e.g., matching the one included in the request), and a lifetime (e.g., granted duration of the association between the ICR and the ECR).

As shown at 613, the IP tunnel may be updated, to be established between the new ICR and the ECR.

As shown at 614, the ECR may send an unsolicited CATS response with zero lifetime to the old ICR to remove state associated with the old tunnel.

As shown at 615, traffic of the service for this sensing terminal may be steered using the updated IP tunnel.

### Example Methods for CATS Device Mobility

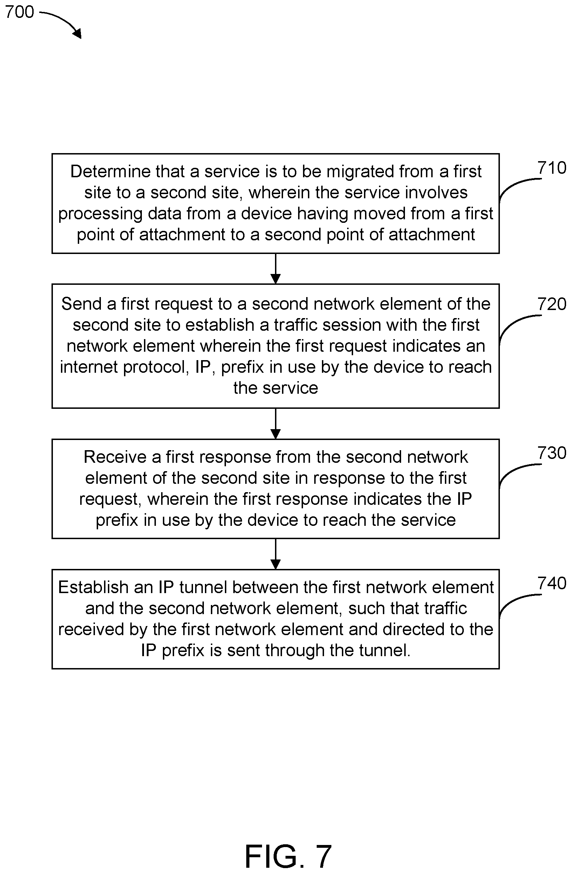

FIG. 7 is a diagram illustrating an example method 700 for CATS device mobility, implemented in a first network element. The first network element may include circuitry including any of transmitter, a receiver, a processor, and a memory. The circuitry may be configured to carry out the method 700. As shown at 710, the method 700 may include determining that a service may be to be migrated from a first site to a second site. In various embodiments, the service may involve processing data from a device having moved from a first point of attachment to a second point of attachment. As shown at 720, the method 700 may include sending a first request to a second network element of the second site to establish a traffic session with the first network element. In various embodiments, the first request may indicate an IP prefix in use by the device to reach the service. As shown at 730, the method 700 may include receiving a first response from the second network element of the second site in response to the first request. In various embodiments, the first response may indicate the IP prefix in use by the device to reach the service. As shown at 740, the method 700 may include establishing an IP tunnel between the first network element and the second network element, such that traffic received by the first network element and directed to the IP prefix may be sent through the tunnel.

In various embodiments, it may be determined that the service may be to be migrated from the first site based on connectivity/computing conditions at the first site not meeting connectivity/computing requirements of the service.

In various embodiments, the first network element may be associated with (e.g., connected to) the second point of attachment.

In various embodiments, the first request may indicate a requested duration of the traffic session between the first network element and the second network element.

In various embodiments, the first response may indicate a granted duration of the traffic session between the first network element and the second network element.

In various embodiments, the method may further comprise sending a second request to a third network element of the first site that was anchoring the IP prefix in use by the device to reach the service prior to migration. In various embodiments, the second request may indicate to remove a state associated with the device and the service.

In various embodiments, the second request may be a CATS request indicating a zero lifetime.

In various embodiments, the method may further comprise sending a plurality of queries to a plurality of candidate network elements of a plurality of sites. In various embodiments, a (e.g., each) query may be sent to a candidate network element of a different site. In various embodiments, the query may indicate any of the service (e.g., to be migrated), the device (e.g., involved in the service), the first network element requesting to establish the traffic session, one or more connectivity requirements, and one or more computing requirements.

In various embodiments, the plurality of queries may be a plurality of CATS queries.

In various embodiments, the method may further comprise receiving from the plurality of candidate network elements a plurality of responses. In various embodiments, a response received from a candidate network element associated with a candidate site may indicate any of the service (e.g., to be migrated), the device (e.g., involved in the service), the candidate network element, and an indication of how any of the one or more connectivity requirements and the one or more computing requirements may be satisfied by the candidate site.

In various embodiments, the method may further comprise selecting the second network element from the plurality of candidate network elements based on the plurality of responses.

In various embodiments, selecting the second network element from the plurality of candidate network elements may comprise selecting the second network element to be the candidate network element of the candidate site for which any of the one or more connectivity requirements and the one or more computing requirements may be satisfied by the candidate site.

In various embodiments, the method may further comprise receiving information from the device, indicating the third network element of the first site that was anchoring the IP prefix in use by the device to reach the service prior to migration.

In various embodiments, the method may further comprise excluding the third network element from the plurality of candidate network elements to which the plurality of queries is to be sent. In various embodiments, no query of the plurality of queries may be sent to the third network element.

In various embodiments, the method may further comprise receiving information from a controller network element indicating any of the service (e.g., to be migrated), the device (e.g., involved in the service), and the second network element of the second site, selected for migrating the service.

In various embodiments, the first network element may include an ingress CATS router.

In various embodiments, the second network element may include an egress CATS router.

In various embodiments, the third network element may include an egress CATS router.

In various embodiments, any of the plurality of candidate network elements may include an egress CATS router.

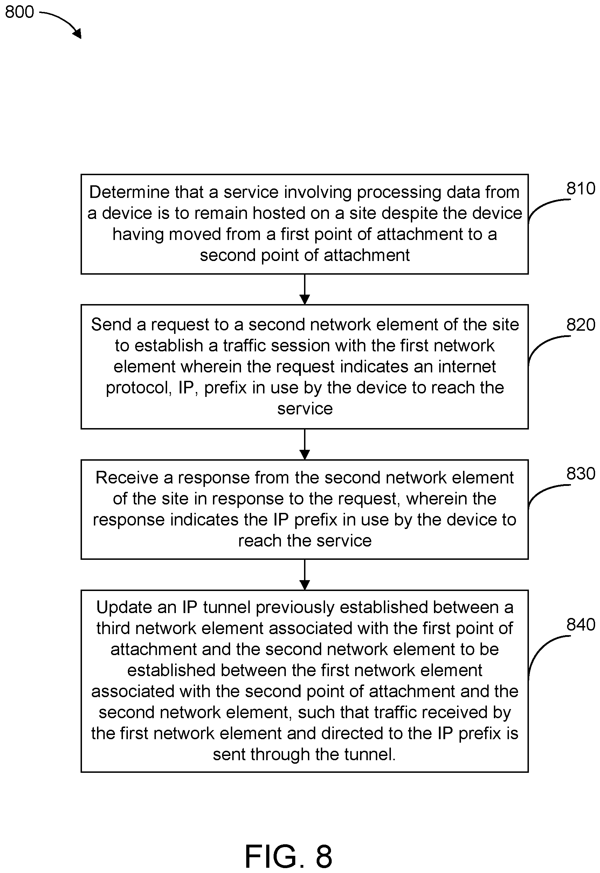

FIG. 8 is a diagram illustrating another example method 800 for CATS device mobility, implemented in a first network element. The first network element may include circuitry including any of transmitter, a receiver, a processor, and a memory. The circuitry may be configured to carry out the method 800. As shown at 810, the method 800 may include determining that a service involving processing data from a device may be to remain hosted on a site despite the device having moved from a first point of attachment to a second point of attachment. As shown at 820, the method 800 may include sending a request to a second network element of the site to establish a traffic session with the first network element. In various embodiments, the request may indicate an IP prefix in use by the device to reach the service. As shown at 830, the method 800 may include receiving a response from the second network element of the site in response to the request. In various embodiments, the response may indicate the IP prefix in use by the device to reach the service. As shown at 840, the method 800 may include updating an IP tunnel previously established between a third network element associated with the first point of attachment and the second network element to be established between the first network element associated with the second point of attachment and the second network element, such that traffic received by the first network element and directed to the IP prefix may be sent through the tunnel.

In various embodiments, it may be determined that the service may be to remain hosted on the first site based on connectivity/computing conditions at the first site meeting connectivity/computing requirements of the service, despite the device having moved to the second point of attachment.

In various embodiments, the request may further indicate any of (i) the service, (ii) the device, (iii) the first network element, (iv) one or more connectivity requirements, (v) one or more computing requirements, and (vi) a requested duration of the traffic session between the first network element and the second network element.

In various embodiments, the response may further indicate any of (i) the service, (ii) the device, (iii) the second network element, (iv) an indication of how any of the one or more connectivity requirements and the one or more computing requirements are satisfied by the site, and (v) a granted duration of the traffic session between the first network element and the second network element.

In various embodiments, the first network element may include an ingress CATS router.

In various embodiments, the second network element may include an egress CATS router.

In various embodiments, the request may be a CATS request.

In various embodiments, the response may be a CATS response.

While not explicitly described, embodiments described herein may be employed in any combination or sub-combination. For example, the present principles are not limited to the described variants, and any arrangement of variants and embodiments can be used. For example, any arrangement of variants described for the method 700 may be applicable to the other method 800.

Besides, any characteristic, variant or embodiment described for a method is compatible with an apparatus device comprising means for processing the disclosed method, with a device comprising circuitry, including any of a transmitter, a receiver, a processor, and a memory, the circuitry being operable (e.g., configured) to process the disclosed method, with a computer program product comprising program code instructions and with a non-transitory computer-readable storage medium storing program instructions. Besides, any characteristic, variant or embodiment described for an (e.g., infrastructure) network element of the cellular network is compatible with a WTRU.

Although features and elements are provided above in particular combinations, one of ordinary skill in the art will appreciate that each feature or element can be used alone or in any combination with the other features and elements. The present disclosure is not to be limited in terms of the particular embodiments described in this application, which are intended as illustrations of various aspects. Many modifications and variations may be made without departing from its spirit and scope, as will be apparent to those skilled in the art. No element, act, or instruction used in the description of the present application should be construed as critical or essential to the invention unless explicitly provided as such. Functionally equivalent methods and apparatuses within the scope of the disclosure, in addition to those enumerated herein, will be apparent to those skilled in the art from the foregoing descriptions. Such modifications and variations are intended to fall within the scope of the appended claims. The present disclosure is to be limited only by the terms of the appended claims, along with the full scope of equivalents to which such claims are entitled. It is to be understood that this disclosure is not limited to particular methods or systems.

The foregoing embodiments are discussed, for simplicity, with regard to the terminology and structure of infrared capable devices, i.e., infrared emitters and receivers. However, the embodiments discussed are not limited to these systems but may be applied to other systems that use other forms of electromagnetic waves or non-electromagnetic waves such as acoustic waves.

It is also to be understood that the terminology used herein is for the purpose of describing particular embodiments only, and is not intended to be limiting. As used herein, the term "video" or the term "imagery" may mean any of a snapshot, single image and/or multiple images displayed over a time basis. As another example, when referred to herein, the terms "user equipment" and its abbreviation "UE", the term "remote" and/or the terms "head mounted display" or its abbreviation "HMD" may mean or include (i) a wireless transmit and/or receive unit (WTRU); (ii) any of a number of embodiments of a WTRU; (iii) a wireless-capable and/or wired-capable (e.g., tetherable) device configured with, inter alia, some or all structures and functionality of a WTRU; (iii) a wireless-capable and/or wired-capable device configured with less than all structures and functionality of a WTRU; or (iv) the like. Details of an example WTRU, which may be representative of any WTRU recited herein, are provided herein with respect to FIGs. 1A-1D. As another example, various disclosed embodiments herein *supra* and *infra* are described as utilizing a head mounted display. Those skilled in the art will recognize that a device other than the head mounted display may be utilized and some or all of the disclosure and various disclosed embodiments can be modified accordingly without undue experimentation. Examples of such other device may include a drone or other device configured to stream information for providing the adapted reality experience.

In addition, the methods provided herein may be implemented in a computer program, software, or firmware incorporated in a computer-readable medium for execution by a computer or processor. Examples of computer-readable media include electronic signals (transmitted over wired or wireless connections) and computer-readable storage media. Examples of computer-readable storage media include, but are not limited to, a read only memory (ROM), a random access memory (RAM), a register, cache memory, semiconductor memory devices, magnetic media such as internal hard disks and removable disks, magnetooptical media, and optical media such as CD-ROM disks, and digital versatile disks (DVDs). A processor in association with software may be used to implement a radio frequency transceiver for use in a WTRU, UE, terminal, base station, RNC, or any host computer.

Variations of the method, apparatus and system provided above are possible without departing from the scope of the invention. In view of the wide variety of embodiments that can be applied, it should be understood that the illustrated embodiments are examples only, and should not be taken as limiting the scope of the following claims. For instance, the embodiments provided herein include handheld devices, which may include or be utilized with any appropriate voltage source, such as a battery and the like, providing any appropriate voltage.

Moreover, in the embodiments provided above, processing platforms, computing systems, controllers, and other devices that include processors are noted. These devices may include at least one Central Processing Unit ("CPU") and memory. In accordance with the practices of persons skilled in the art of computer programming, reference to acts and symbolic representations of operations or instructions may be performed by the various CPUs and memories. Such acts and operations or instructions may be referred to as being "executed," "computer executed" or "CPU executed."

One of ordinary skill in the art will appreciate that the acts and symbolically represented operations or instructions include the manipulation of electrical signals by the CPU. An electrical system represents data bits that can cause a resulting transformation or reduction of the electrical signals and the maintenance of data bits at memory locations in a memory system to thereby reconfigure or otherwise alter the CPU's operation, as well as other processing of signals. The memory locations where data bits are maintained are physical locations that have particular electrical, magnetic, optical, or organic properties corresponding to or representative of the data bits. It should be understood that the embodiments are not limited to the above-mentioned platforms or CPUs and that other platforms and CPUs may support the provided methods.

The data bits may also be maintained on a computer readable medium including magnetic disks, optical disks, and any other volatile (e.g., Random Access Memory (RAM)) or non-volatile (e.g., Read-Only Memory (ROM)) mass storage system readable by the CPU. The computer readable medium may include cooperating or interconnected computer readable medium, which exist exclusively on the processing system or are distributed among multiple interconnected processing systems that may be local or remote to the processing system. It should be understood that the embodiments are not limited to the above-mentioned memories and that other platforms and memories may support the provided methods.

In an illustrative embodiment, any of the operations, processes, etc. described herein may be implemented as computer-readable instructions stored on a computer-readable medium. The computer-readable instructions may be executed by a processor of a mobile unit, a network element, and/or any other computing device.

There is little distinction left between hardware and software implementations of aspects of systems. The use of hardware or software is generally (but not always, in that in certain contexts the choice between hardware and software may become significant) a design choice representing cost versus efficiency tradeoffs. There may be various vehicles by which processes and/or systems and/or other technologies described herein may be effected (e.g., hardware, software, and/or firmware), and the preferred vehicle may vary with the context in which the processes and/or systems and/or other technologies are deployed. For example, if an implementer determines that speed and accuracy are paramount, the implementer may opt for a mainly hardware and/or firmware vehicle. If flexibility is paramount, the implementer may opt for a mainly software implementation. Alternatively, the implementer may opt for some combination of hardware, software, and/or firmware.

The foregoing detailed description has set forth various embodiments of the devices and/or processes via the use of block diagrams, flowcharts, and/or examples. Insofar as such block diagrams, flowcharts, and/or examples include one or more functions and/or operations, it will be understood by those within the art that each function and/or operation within such block diagrams, flowcharts, or examples may be implemented, individually and/or collectively, by a wide range of hardware, software, firmware, or virtually any combination thereof. In an embodiment, several portions of the subject matter described herein may be implemented via Application Specific Integrated Circuits (ASICs), Field Programmable Gate Arrays (FPGAs), digital signal processors (DSPs), and/or other integrated formats. However, those skilled in the art will recognize that some aspects of the embodiments disclosed herein, in whole or in part, may be equivalently implemented in integrated circuits, as one or more computer programs running on one or more computers (e.g., as one or more programs running on one or more computer systems), as one or more programs running on one or more processors (e.g., as one or more programs running on one or more microprocessors), as firmware, or as virtually any combination thereof, and that designing the circuitry and/or writing the code for the software and or firmware would be well within the skill of one of skill in the art in light of this disclosure. In addition, those skilled in the art will appreciate that the mechanisms of the subject matter described herein may be distributed as a program product in a variety of forms, and that an illustrative embodiment of the subject matter described herein applies regardless of the particular type of signal bearing medium used to actually carry out the distribution. Examples of a signal bearing medium include, but are not limited to, the following: a recordable type medium such as a floppy disk, a hard disk drive, a CD, a DVD, a digital tape, a computer memory, etc., and a transmission type medium such as a digital and/or an analog communication medium (e.g., a fiber optic cable, a waveguide, a wired communications link, a wireless communication link, etc.).

Those skilled in the art will recognize that it is common within the art to describe devices and/or processes in the fashion set forth herein, and thereafter use engineering practices to integrate such described devices and/or processes into data processing systems. That is, at least a portion of the devices and/or processes described herein may be integrated into a data processing system via a reasonable amount of experimentation. Those having skill in the art will recognize that a typical data processing system may generally include one or more of a system unit housing, a video display device, a memory such as volatile and non-volatile memory, processors such as microprocessors and digital signal processors, computational entities such as operating systems, drivers, graphical user interfaces, and applications programs, one or more interaction devices, such as a touch pad or screen, and/or control systems including feedback loops and control motors (e.g., feedback for sensing position and/or velocity, control motors for moving and/or adjusting components and/or quantities). A typical data processing system may be implemented utilizing any suitable commercially available components, such as those typically found in data computing/communication and/or network computing/communication systems.

The herein described subject matter sometimes illustrates different components included within, or connected with, different other components. It is to be understood that such depicted architectures are merely examples, and that in fact many other architectures may be implemented which achieve the same functionality. In a conceptual sense, any arrangement of components to achieve the same functionality is effectively "associated" such that the desired functionality may be achieved. Hence, any two components herein combined to achieve a particular functionality may be seen as "associated with" each other such that the desired functionality is achieved, irrespective of architectures or intermedial components. Likewise, any two components so associated may also be viewed as being "operably connected", or "operably coupled", to each other to achieve the desired functionality, and any two components capable of being so associated may also be viewed as being "operably couplable" to each other to achieve the desired functionality. Specific examples of operably couplable include but are not limited to physically mateable and/or physically interacting components and/or wirelessly interactable and/or wirelessly interacting components and/or logically interacting and/or logically interactable components.

With respect to the use of substantially any plural and/or singular terms herein, those having skill in the art can translate from the plural to the singular and/or from the singular to the plural as is appropriate to the context and/or application. The various singular/plural permutations may be expressly set forth herein for sake of clarity.

It will be understood by those within the art that, in general, terms used herein, and especially in the appended claims (e.g., bodies of the appended claims) are generally intended as "open" terms (e.g., the term "including" should be interpreted as "including but not limited to," the term "having" should be interpreted as "having at least," the term "includes" should be interpreted as "includes but is not limited to," etc.). It will be further understood by those within the art that if a specific number of an introduced claim recitation is intended, such an intent will be explicitly recited in the claim, and in the absence of such recitation no such intent is present. For example, where only one item is intended, the term "single" or similar language may be used. As an aid to understanding, the following appended claims and/or the descriptions herein may include usage of the introductory phrases "at least one" and "one or more" to introduce claim recitations. However, the use of such phrases should not be construed to imply that the introduction of a claim recitation by the indefinite articles "a" or "an" limits any particular claim including such introduced claim recitation to embodiments including only one such recitation, even when the same claim includes the introductory phrases "one or more" or "at least one" and indefinite articles such as "a" or "an" (e.g., "a" and/or "an" should be interpreted to mean "at least one" or "one or more"). The same holds true for the use of definite articles used to introduce claim recitations. In addition, even if a specific number of an introduced claim recitation is explicitly recited, those skilled in the art will recognize that such recitation should be interpreted to mean at least the recited number (e.g., the bare recitation of "two recitations," without other modifiers, means at least two recitations, or two or more recitations). Furthermore, in those instances where a convention analogous to "at least one of A, B, and C, etc." is used, in general such a construction is intended in the sense one having skill in the art would understand the convention (e.g., "a system having at least one of A, B, and C" would include but not be limited to systems that have A alone, B alone, C alone, A and B together, A and C together, B and C together, and/or A, B, and C together, etc.). In those instances where a convention analogous to "at least one of A, B, or C, etc." is used, in general such a construction is intended in the sense one having skill in the art would understand the convention (e.g., "a system having at least one of A, B, or C" would include but not be limited to systems that have A alone, B alone, C alone, A and B together, A and C together, B and C together, and/or A, B, and C together, etc.). It will be further understood by those within the art that virtually any disjunctive word and/or phrase presenting two or more alternative terms, whether in the description, claims, or drawings, should be understood to contemplate the possibilities of including one of the terms, either of the terms, or both terms. For example, the phrase "A or B" will be understood to include the possibilities of "A" or "B" or "A and B." Further, the terms "any of" followed by a listing of a plurality of items and/or a plurality of categories of items, as used herein, are intended to include "any of," "any combination of," "any multiple of," and/or "any combination of multiples of" the items and/or the categories of items, individually or in conjunction with other items and/or other categories of items. Moreover, as used herein, the term "set" is intended to include any number of items, including zero. Additionally, as used herein, the term "number" is intended to include any number, including zero. And the term "multiple", as used herein, is intended to be synonymous with "a plurality".

In addition, where features or aspects of the disclosure are described in terms of Markush groups, those skilled in the art will recognize that the disclosure is also thereby described in terms of any individual member or subgroup of members of the Markush group.

As will be understood by one skilled in the art, for any and all purposes, such as in terms of providing a written description, all ranges disclosed herein also encompass any and all possible subranges and combinations of subranges thereof. Any listed range can be easily recognized as sufficiently describing and enabling the same range being broken down into at least equal halves, thirds, quarters, fifths, tenths, etc. As a non-limiting example, each range discussed herein may be readily broken down into a lower third, middle third and upper third, etc. As will also be understood by one skilled in the art all language such as "up to," "at least," "greater than," "less than," and the like includes the number recited and refers to ranges which can be subsequently broken down into subranges as discussed above. Finally, as will be understood by one skilled in the art, a range includes each individual member. Thus, for example, a group having 1-3 cells refers to groups having 1, 2, or 3 cells. Similarly, a group having 1-5 cells refers to groups having 1, 2, 3, 4, or 5 cells, and so forth.

Moreover, the claims should not be read as limited to the provided order or elements unless stated to that effect. In addition, use of the terms "means for" in any claim is intended to invoke 35 U.S.C. §112, ¶ 6 or means-plus-function claim format, and any claim without the terms "means for" is not so intended.

## Claims

1. A method implemented in a first network element, the method comprising:
determining that a service is to be migrated from a first site to a second site, wherein the service involves processing data from a device having moved from a first point of attachment to a second point of attachment;
sending a first request to a second network element of the second site to establish a traffic session with the first network element wherein the first request indicates an internet protocol, IP, prefix in use by the device to reach the service;
receiving a first response from the second network element of the second site in response to the first request, wherein the first response indicates the IP prefix in use by the device to reach the service; and
establishing an IP tunnel between the first network element and the second network element, such that traffic received by the first network element and directed to the IP prefix is sent through the tunnel.

2. A first network element comprising circuitry, including any of a transmitter, a receiver, a processor, and a memory, configured to:
determine that a service is to be migrated from a first site to a second site, wherein the service involves processing data from a device having moved from a first point of attachment to a second point of attachment;
send a first request to a second network element of the second site to establish a traffic session with the first network element wherein the first request indicates an internet protocol, IP, prefix in use by the device to reach the service;
receive a first response from the second network element of the second site in response to the first request, wherein the first response indicates the IP prefix in use by the device to reach the service; and
establish an IP tunnel between the first network element and the second network element, such that traffic received by the first network element and directed to the IP prefix is sent through the tunnel.

3. The method of claim 1 or the first network element of claim 2, wherein the first network element is associated with the second point of attachment.

4. The method of any of claims 1 and 3, or the first network element of any of claims 2 to 3, wherein the first request indicates a requested duration of the traffic session between the first network element and the second network element, and wherein the first response indicates a granted duration of the traffic session between the first network element and the second network element.

5. The method of any of claims 1 and 3 to 4 further comprising or the first network element of any of claims 2 to 4 further configured to send a second request to a third network element of the first site that was anchoring the IP prefix in use by the device to reach the service prior to migration, wherein the second request indicates to remove a state associated with the device and the service.

6. The method or the first network element of claim 5, wherein the second request is a computing aware traffic steering, CATS, request indicating a zero lifetime.

7. The method of any of claims 1 and 3 to 6 further comprising or the first network element of any of claims 2 to 6 further configured to send a plurality of queries to a plurality of candidate network elements of a plurality of sites, wherein each query is sent to a candidate network element of a different site, and wherein the query indicates any of the service, the device, the first network element requesting to establish the traffic session, one or more connectivity requirements, and one or more computing requirements.

8. The method of claim 7 further comprising or the first network element of claim 7 further configured to receive from the plurality of candidate network elements a plurality of responses, wherein a response received from a candidate network element associated with a candidate site indicates any of the service, the device, the candidate network element, and an indication of how any of the one or more connectivity requirements and the one or more computing requirements are satisfied by the candidate site.

9. The method of claim 8 further comprising or the first network element of claim 8 further configured to select the second network element from the plurality of candidate network elements based on the plurality of responses.

10. The method of any of claims 5 to 9 further comprising or the first network element of any of claims 5 to 9 further configured to receive information from the device indicating the third network element of the first site that was anchoring the IP prefix in use by the device to reach the service prior to migration.

11. The method of any of claims 1 and 3 to 6 further comprising or the first network element of any of claims 2 to 6 further configured to receive information from a controller network element indicating any of the service, the device, and the second network element of the second site, selected for migrating the service.

12. A method implemented in a first network element, the method comprising:
determining that a service involving processing data from a device is to remain hosted on a site despite the device having moved from a first point of attachment to a second point of attachment;
sending a request to a second network element of the site to establish a traffic session with the first network element wherein the request indicates an internet protocol, IP, prefix in use by the device to reach the service;
receiving a response from the second network element of the site in response to the request, wherein the response indicates the IP prefix in use by the device to reach the service; and
updating an IP tunnel previously established between a third network element associated with the first point of attachment and the second network element to be established between the first network element associated with the second point of attachment and the second network element, such that traffic received by the first network element and directed to the IP prefix is sent through the tunnel.

13. A first network element comprising circuitry, including any of a transmitter, a receiver, a processor, and a memory, configured to:
determine that a service involving processing data from a device is to remain hosted on a site despite the device having moved from a first point of attachment to a second point of attachment;
send a request to a second network element of the site to establish a traffic session with the first network element wherein the request indicates an internet protocol, IP, prefix in use by the device to reach the service;
receive a response from the second network element of the site in response to the request, wherein the response indicates the IP prefix in use by the device to reach the service; and
update an IP tunnel previously established between a third network element associated with the first point of attachment and the second network element to be established between the first network element associated with the second point of attachment and the second network element, such that traffic received by the first network element and directed to the IP prefix is sent through the tunnel.

14. The method of claim 12 or the first network element of claim 13, wherein the request further indicates any of (i) the service, (ii) the device, (iii) the first network element, (iv) one or more connectivity requirements, (v) one or more computing requirements, and (vi) a requested duration of the traffic session between the first network element and the second network element.

15. The method or the first network element of claim 14, wherein the response further indicates any of (i) the service, (ii) the device, (iii) the second network element, (iv) an indication of how any of the one or more connectivity requirements and the one or more computing requirements are satisfied by the site, and (v) a granted duration of the traffic session between the first network element and the second network element.
